(19) Europäisches Patentamt
European Patent Office
Office européen des brevets

(11) **EP 4 395 166 A1**

(12) **EUROPEAN PATENT APPLICATION**

(43) Date of publication:
**03.07.2024 Bulletin 2024/27**

(21) Application number: **23220360.4**

(22) Date of filing: **27.12.2023**

(51) International Patent Classification (IPC):
**H02S 50/00** $^{(2014.01)}$

(52) Cooperative Patent Classification (CPC):
**H02S 50/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.12.2022 US 202263436190 P**

(71) Applicant: **Solaredge Technologies Ltd.
Herzeliya 4673335 (IL)**

(72) Inventors:
• **ZALTZHENDLER, Oren**
**4673335 Herzeliya (IL)**
• **YOSCOVICH, Ilan**
**4673335 Herzeliya (IL)**

(74) Representative: **V.O.
P.O. Box 87930
2508 DH Den Haag (NL)**

(54) **HOT SPOT MITIGATION DEVICE AND METHOD**

(57) Systems, apparatuses, and methods are described for hot spot mitigation of a photovoltaic (PV) module. In some examples, control circuitry may be configured to operate in a first mode of operation wherein an operating point of the PV module is set based on a maximum power point tracking algorithm, and a second mode of operation wherein the operating point of the PV module is set based on a hot spot mitigation algorithm to produce a reduced power output and prevent over-heating of the PV module. The operating point may be set based on an inflection point in the I-V curve of the PV module. The operating point may be set based on zero crossings in the second-order derivative of the I-V curve of the PV module. A filter window with one or more filter thresholds may be used in order to determine the zero crossings and set the operating point.

Fig. 5

**Description**

**BACKGROUND**

A photovoltaic (PV) cell, also referred to herein as a solar cell, is a device that converts energy from light into electrical energy. The characteristics of electrical energy generated by the solar cell may vary depending on the amount of light that the solar cell is exposed to. For example, when the solar cell is shaded or otherwise covered then it may produce less power compared to when the solar cell is un-shaded and directly exposed to light. A plurality of PV cells may be connected (e.g., in series) to one another to form a PV cell string. PV modules, also referred to herein as solar panels, may include a plurality of PV cell strings connected to one another. Mismatch losses in PV modules may be caused by the connection of a plurality of solar cells to one another which do not have identical properties or which experience different conditions. For example, when one solar cell is shaded while other solar cells are not, the shaded solar cell may produce less voltage than the unshaded solar cells, which may lead to a reverse bias of the shaded solar cell. When reverse biased, the shaded solar cell may operate similar to a resistor and the voltage drop generated by the shaded solar cell may be transferred into heat. At least some of the power being generated by the unshaded solar cells may be dissipated by the shaded solar cell. This may lead to relatively highly localized power dissipation and the resultant local heating may damage the PV module. The heating of a solar cell, or part of a solar cell may be referred to as a hot spot of the PV module. For example, a hot spot may be defined as the heating of a solar cell, or part of a solar cell, to a temperature at or above a temperature threshold. Hot spots may cause degradation of the PV module.

**SUMMARY**

The following summary presents a simplified summary of certain features. The summary is not an extensive overview and is not intended to identify key or critical elements.

Systems, apparatuses, and methods are described for mitigating hot spots of a PV module.

In some examples, control circuitry may be configured to operate in a first mode of operation wherein an operating point of the PV module is set based on a maximum power point tracking algorithm, and a second mode of operation wherein the operating point of the PV module is set based on a hot spot mitigation algorithm to produce a reduced power output and prevent over-heating of the PV module. In some examples, control circuitry may be configured to set the operating point of the PV module based on a hot spot mitigation algorithm and not to set the operating point of the PV module based on a maximum power point tracking algorithm.

In some examples, the control circuitry may be configured to set an operating point of the PV module, which includes a plurality of solar cells, to ensure that none of the solar cells of the PV module are producing a negative voltage. The control circuitry may be configured to set the operating point of the PV module based on an inflection point in the current-voltage (I-V) curve of the PV module. The control circuitry may be configured to set the operating point of the PV module based on zero crossings in the second-order derivative of the I-V curve of the PV module. The control circuitry may be configured to use a filter window with one or more filter thresholds in order to determine the zero crossings and set the operating point of the PV module.

These and other features and advantages are described in greater detail below.

**BRIEF DESCRIPTION OF THE DRAWINGS**

Some features are shown by way of example, and not by limitation, in the accompanying drawings. In the drawings, like numerals reference similar elements.

FIG. 1 shows an example flow diagram.
FIG. 2 shows an example flow diagram.
FIG. 3 shows an example flow diagram.
FIG. 4 shows an example flow diagram.
FIG. 5 shows an example power system.
FIG. 6A shows an example power module with bypass diodes.
FIG. 6B shows an example power module without bypass diodes.
FIG. 7 shows example power converter circuitry.
FIG. 8 shows an example graph.
FIG. 9 shows an example graph.
FIG. 10 shows an example graph.
FIG. 11 shows an example graph.
FIG. 12 shows an example graph.

FIG. 13 shows an example graph.
FIG. 14 shows an example graph.
FIG. 15 shows an example graph.
FIG. 16A shows an example graph.
FIG. 16B shows an example graph.
FIG. 16C shows an example graph.
FIG. 16D shows an example graph.
FIG. 16E shows an example graph.
FIG. 16F shows an example graph.
FIG. 16G shows an example graph.
FIG. 16H shows an example graph.
FIG. 16I shows an example graph.
FIG. 16J shows an example graph.
FIG. 16K shows an example graph.
FIG. 16L shows an example graph.
FIG. 17A shows an example graph.
FIG. 17B shows an example graph.
FIG. 18 shows an example graph.

## DETAILED DESCRIPTION

The accompanying drawings, which form a part hereof, show examples of the disclosure. It is to be understood that the examples shown in the drawings and/or discussed herein are non-exclusive and that there are other examples of how the disclosure may be practiced.

Systems, apparatuses, and methods are described herein for hot spot mitigation. In some examples, control circuitry may be configured to operate in a first mode of operation wherein the operating point of the PV module is set based on a maximum power point tracking algorithm, and a second mode of operation wherein the operating point of the PV module is set based on a hot spot mitigation algorithm to produce a reduced power output and prevent over-heating of the PV module. In some examples, control circuitry may be configured to set the operating point of the PV module based on a hot spot mitigation algorithm and not to set the operating point of the PV module based on a maximum power point tracking algorithm. The hot spot mitigation algorithm may be used to limit output current of a PV module to help prevent hots pots and stop degradation of the PV module.

In some examples, the control circuitry may be configured to set an operating point of the PV module, which includes a plurality of solar cells (e.g., one or more strings of PV cells), to ensure that none of the solar cells of the PV module are producing a negative voltage. The control circuitry may be configured to set the operating point of the PV module based on an inflection point in the I-V curve of the PV module. The control circuitry may be configured to set the operating point of the PV module based on zero crossings in the second-order derivative of the I-V curve of the PV module. The control circuitry may be configured to use a filter window with one or more filter thresholds in order to determine the zero crossings and set the operating point of the PV module.

It is noted that the teachings of the presently disclosed subject matter are not bound by the systems and apparatuses described with reference to the figures. Equivalent and/or modified functionality may be consolidated or divided in another manner and may be implemented in any appropriate combination. For example, elements which are shown as separate units, may have their functionalities and/or components combined into a single unit.

It is also noted that like references in the various figures may refer to like elements throughout the application. Similar reference numbers may also connote similarities between elements.

It is also noted that all numerical values given in the examples of the description are provided for purposes of example only and do not exclude the use of other numerical values for the same feature.

The terms "substantially" and "about" are used herein to indicate variations that are equivalent for an intended purpose or function (e.g., within a permissible variation range). Certain values or ranges of values are presented herein with numerical values being preceded by the terms "substantially" and "about". The terms "substantially" and "about" are used herein to provide literal support for the exact number that it precedes, as well as a number that is near to or approximately the number that the term precedes. In determining whether a number is near to or approximately a specifically recited number, the near or approximating un-recited number may be a number, which, in the context in which it is presented, provides a substantial equivalent of the specifically recited number.

Control devices, including a "controller," "control circuitry," a "computer," a "processor," "processing circuitry," and variations of these terms as used herein, include any analog or digital electronic hardware circuit capable of performing one or more logical or arithmetic functions. The functions may be based on a received signal (e.g., from a sensor that measures a physical parameter as in the various example described herein). Performance of the functions may cause an output of a signal (e.g., to control another device such as a switch or to provide an indication as in the various examples described herein). Such control devices include, by way of non-limiting examples, a digital signal processor (DSP), microprocessor, microcontroller, field programmable gate array (FPGA), application-specific integrated circuit (ASIC), embedded controller, analog comparator, analog-to-digital controller, digital-to-analog controller, etc., or combinations thereof. Such control devices may include or be connected to a memory that stores instructions that may be read, interpreted and executed by the devices, and based on the executed instructions, perform any one of functions or control as described herein. The terms "memory" or "data storage device" used herein include any volatile or non-volatile computer memory suitable to the presently disclosed subject matter (e.g., random-access memory [RAM], static random-access memory (SRAM), read-only memory (ROM), erasable programmable read-only memory (EPROM), electrically erasable programmable read-only memory (EEPROM), dynamic random-access memory (DRAM), etc.). The above may include any of the control circuitry disclosed herein. More specifically, by way of non-limiting example, the above may include the control circuitry 516A, 516B, 516C, 516AA, 516AB, 516X disclosed in the present application. Control devices may be included or connected to interface hardware, that converts signals from other devices (e.g., sensors) to signals compatible with the control device (e.g., a comparator or analog to digital (A/D) converter that converts an analog signal to a digital signal), or that converts signals from the control device to signals compatible with another device (e.g., an amplifier for driving a control input of a switch). The control circuitry may be configured to output control signals to control an operational state (e.g., ON, OFF, opened, closed, etc.) of one or more switches.

The term "switch" used herein may refer to any appropriate switching element that may be switched in a non-permanent fashion. Examples of switches are (but not limited to): a transistor, a field effect transistor (FET), a metal oxide semiconductor field-effect transistor (MOSFET), a bipolar junction transistor (BJT), an insulated-gate bipolar transistor (IGBT), a Silicon Carbide (SiC) switch, a Gallium Nitride (GaN) switch, a thyristor, a semiconductor controlled rectifier (SCR), a solid state relay (SSR), electromechanical relays, alternating current (AC) relays, throw switches, etc. The switch may be single throw, double throw, etc. Switches may be controlled into different states (e.g., ON, OFF) via a control input (e.g., gate, base, coil terminals) connected to a signal generated from a control device (e.g., based on performing one or more functions).

The term "operating point" used herein may refer to a point on the current-voltage (I-V) curve of the output (e.g., Vout, Iout) of a PV module. The operating point may be representative of the output current and output voltage produced by the PV module at output terminals of the PV module. The output terminals of the PV module may be connected to input terminals of a power device. Therefore, the operating point may also be representative of the input current and input voltage provided to the input terminals of the power device. The input current and the input voltage provided to the power device may be used by power converter circuitry of the power device to produce a second output current and a second output voltage at output terminals of the power device. A duty cycle of the power device may be used to control the operating point of the PV module. For example, by controlling the duty cycle of the power converter circuitry of the power device using control circuitry, the control circuitry may control the operating point of the PV module on the I-V curve. For example, a lower duty cycle, wherein one or more switches are operated in the ON state for a relatively lesser amount of time, may control the operating point of the PV module to be closer to zero current and open circuit voltage on the I-V curve of the output of the PV module, and a higher duty cycle, wherein one or more switches are operated in the ON for a relatively greater amount of time, may control the operating point of the PV module to be closer to zero voltage and short circuit current on the I-V curve of the output of the PV module.

The term "duty cycle" used herein may refer to a percentage of time that one or more switches of power converter circuitry are active for a time period.

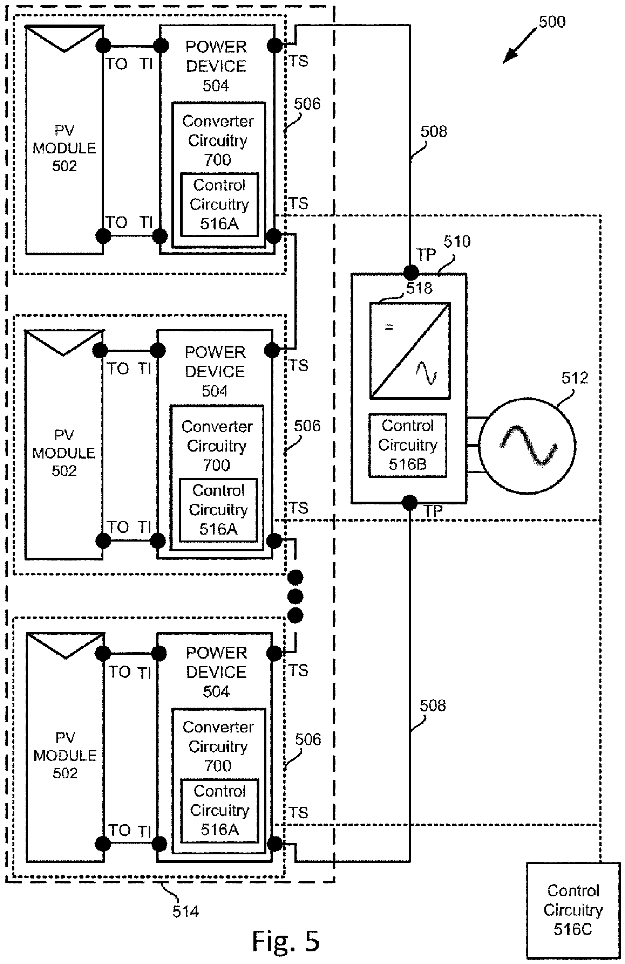

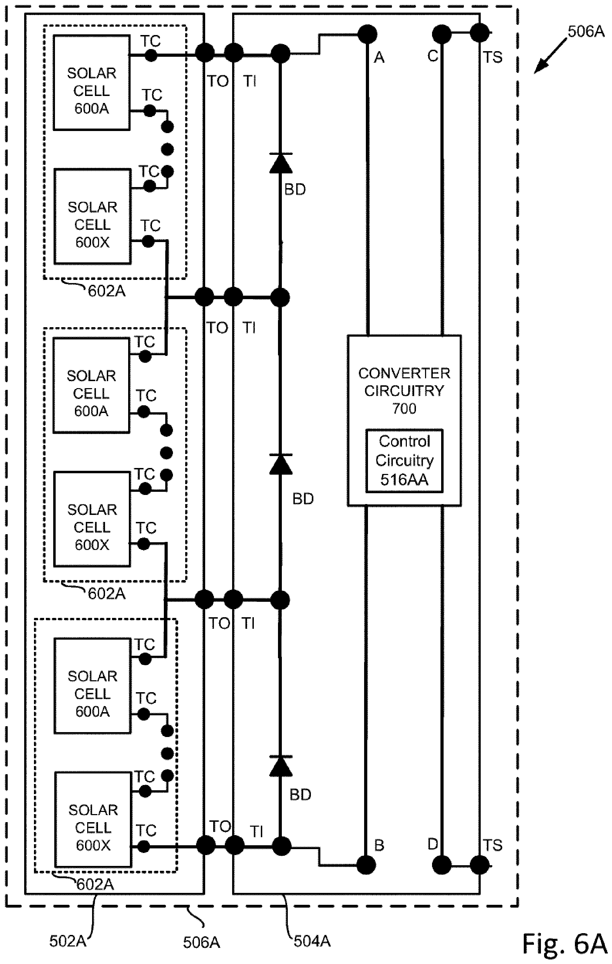

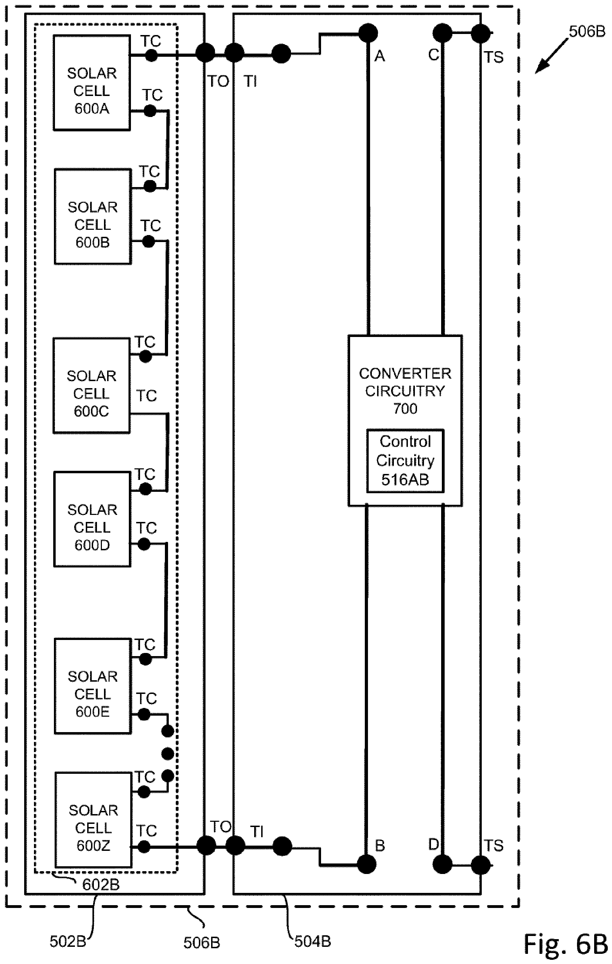

Reference is now made to Fig. 5, which shows a power system 500. Power system 500 includes one or more PV modules 502. Each PV module 502 may include a plurality of PV cell strings 602 (shown, for example, as PV cell strings 602A in Fig. 6A and PV cell strings 602B Fig. 6B). Each PV cell string 602 may include one or more solar cells 600 (shown, for example, as solar cells 600A through 600X in Fig. 6A and Fig. 6B).

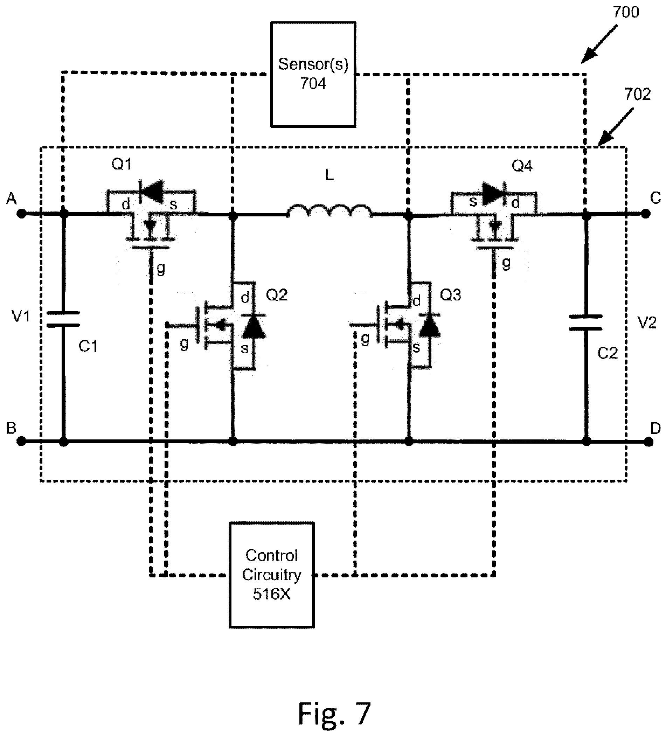

Power system 500 may include one or more power devices 504. Each power device 504 may include power converter circuitry 700. Power converter circuitry 700 may include one or more power conversion circuits 702 (shown, for example, in Fig. 7), also referred to herein as power converters. The one or more power conversion circuits 702 may include, for example, one or more: buck converter circuitry, boost converter circuitry, buck/boost converter circuitry, buck + boost converter circuitry, flyback converter circuitry, etc.

Each power device 504 may include one or more bypass diodes BD (shown, for example, in Fig. 6A) or may be without bypass diodes BD (shown, for example, in Fig. 6B).

Each power device 504 may include control circuitry 516A. Control circuitry 516A may be configured to operate in a first mode of operation wherein the operating point of the PV module(s) 502 is set based on a maximum power point tracking algorithm, and a second mode of operation wherein the operating point of the PV module(s) 502 is set based on a hot spot mitigation algorithm to produce a reduced power output and prevent over-heating of the PV module(s) 502. Control circuitry 516A may be located in one or more power device 504. In some examples, control circuitry 516A may be located in a first power device 504 and configured to control operation of a second different power device 504.

For example, control circuitry 516A might not be located in the second power device 504. In some examples, central control circuitry 516C that is external from all of the power devices 504 may be configured to control operation of one or more of the power devices 504. Control circuitry 516C may be connected to one or more power devices 504 using any appropriate physical or non-physical connection. For example, control circuitry 516C may be connected to one or more power devices 504 using power line communication or wireless communication shown as dashed lines in Fig. 5. Control circuitry 516C may be configured to control the duty cycle of one or more switches of one or more power devices 504. In some examples, central control circuitry 516B that is located in a system power device 510 may be configured to control operation of one or more of the power devices 504. Control circuitry 516B of system power device 510 may be connected to one or more power devices 504 using any appropriate physical or non-physical connection. For example, control circuitry 516B may be connected to one or more power devices 504 using power line communication or wireless communication. Control circuitry 516B may be configured to control the duty cycle of one or more switches of the power devices 504.

Control circuitry 516A, 516B, 516C may be configured to receive a plurality of data points related to the PV module(s) 502 for a plurality of times. For example, the plurality of data points may be operating points (Vout, Iout) of the PV module(s) 502. Control circuitry 516A, 516B, 516C may be configured to calculate a plurality of derivatives based on a plurality of data points for a plurality of times. Control circuitry 516A, 516B, 516C may be configured to determine a zero crossing based on a plurality of derivatives. Control circuitry 516A, 516B, 516C may be configured to set an operating point (Vout, Iout, e.g., by setting a duty cycle of the power device(s) 504) of the PV module(s) 502 based on one or more determined zero crossings. The plurality of data points may comprise a plurality of voltage values and a plurality of current values. The plurality of derivatives may comprise a plurality of first-order derivatives or a plurality of second-order derivatives. The plurality of derivatives may be related to a current-voltage (I-V) curve of the PV module(s) 502. The plurality of derivatives may be derivatives of current as a dependent variable and voltage as an independent variable (dI/dV) or derivatives of voltage as a dependent variable and current as an independent variable (dV/dI). Control circuitry 516A, 516B, 516C may be configured to determine the zero crossing based on a determination that there is a change in sign between a first one of the plurality derivatives and a second one of the plurality of derivatives. The change in sign may be from a positive value to a negative value or from a negative value to a positive value. Control circuitry 516A, 516B, 516C may be configured to determine the zero crossing based on interpolation of the plurality of derivatives. The interpolation may be linear interpolation or non-linear interpolation. Control circuitry 516A, 516B, 516C may be configured to filter the plurality of derivatives when determining the zero crossing. Control circuitry 516A, 516B, 516C may be configured to determine that a derivative exceeds a threshold. The threshold may be a positive threshold or a negative threshold. The threshold may also be an absolute value, and an absolute value of the derivative may be compared against the threshold. The zero crossing used to set the operating point of the PV module(s) 502 may be selected from a plurality of zero crossings based on a sorting of the plurality of data points, or a sorting of the plurality of derivatives. The sorting of the plurality of data points may be based on highest to lowest voltage, lowest to highest voltage, highest to lowest current, or lowest to highest current. Control circuitry 516A, 516B, 516C may be configured to filter the plurality of derivatives before determining the zero crossing. Control circuitry 516A, 516B, 516C may be configured to calculate a power related to the plurality of data points (e.g., received at a given time), and based on a determination that there is a power decrease between the calculated power and a previously calculated power related to a previous plurality of data points (e.g., received at a different, earlier time), set the operating point of the PV module(s) 502 based on the previous plurality of data points.

Each power device 504 may include a plurality of input terminals TI connected to a plurality of output terminals TO of at least one PV module 502. In some examples, a pair of output terminals TO of PV module 502 may be connected to a pair of input terminals TI of power device 504. For example, if power device 504 is without bypass diodes BD (shown, for example, in Fig. 6B), then a pair of output terminals TO that are connected to a pair of input terminals TI may be sufficient. In some examples, three or more output terminals TO of PV module(s) 502 may be connected to three or more input terminals TI of power device 504. For example, if power device 504 has one or more bypass diodes BD (shown, for example, in Fig. 6A), then three or more output terminals TO may be needed to connect to three or more input terminals TI. For example, if power device 504 has three bypass diodes BD, then four output terminals TO may be connected respectively to four input terminals TI. Each power device 504 may include a plurality of power device output terminals TS. Each power device output terminal TS may be connected to a power device output terminal TS of a different power device 504, or may be connected to a direct current (DC) bus 508.

A power device 504 together with one or more PV modules 502 connected to the power device 504 is referred to herein as a power module 506. Power system 500 may include one or more power modules 506. A plurality of power modules 506 may be connected to each other in series across DC bus 508 to form a series string 514 of power modules 506. Power system 500 may include one or more series strings 514 of power modules 506. The one or more series strings 514 of power modules 506 may be connected to a plurality of input terminals TP of one or more system power devices 510. The plurality of series strings 514 may be connected to each other in parallel via the input terminals TP of the one or more system power devices 510. The term "PV power source" used herein may refer to PV module 502 alone or together with a power device 504 (e.g., a power module 506).

The one or more system power devices 510 may be, for example, one or more: DC to DC converters (e.g., buck converters, boost converters, buck/boost converters, buck + boost converters, etc.), DC to AC converters (also referred to as inverters), combiner and/or monitoring boxes, etc. The one or more system power devices 510 may be an inverter for one or more phases (e.g., one phase inverter, two phase inverter, three phase inverter, etc.), or may include lines or phases that are not shown herein for the sake of simplicity.

System power device 510 may be connected to an electrical power grid 512. Series strings 514 may also be connected to one or more charge storage devices (e.g., batteries).

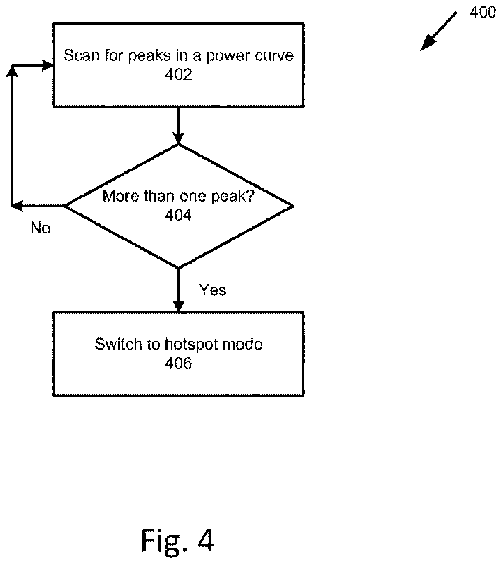

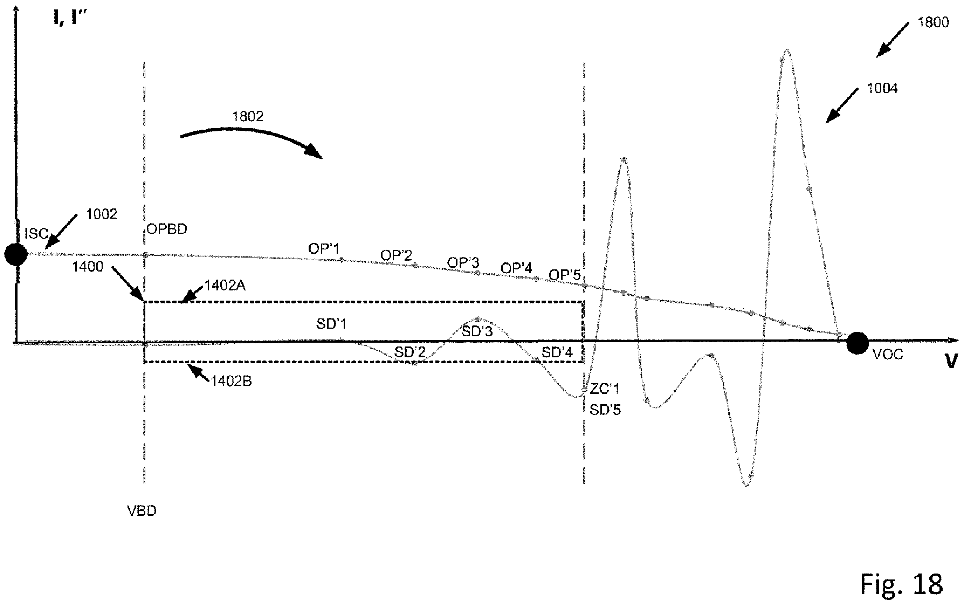

Reference is now made to Fig. 6A, which shows a power module 506A with bypass diodes BD. One or more of the power modules 506 of power system 500 of Fig. 5 may be power module 506A. As mentioned above, power module 506A may include a PV module 502A and a power device 504A. PV module 502A may include a plurality of solar cells 600, also referred to herein as PV cells 600. A plurality of solar cells 600 may be connected to each other in series between a pair of output terminals TO to form a PV cell string 602A. For example, each solar cell 600 may include a plurality of solar cell terminals TC. Each solar cell terminal TC may be connected to a solar cell terminal TC of a different solar cell 600, and/or may be connected to an output terminal TO. For example, a first solar cell terminal TC of a first solar cell 600 may be connected to a second solar cell terminal TC of a different second solar cell 600 to form a PV cell string 602A. PV module 502A may include one or more PV cell strings 602A. The solar cells 600 of a given PV cell string 602A are shown as solar cell 600A through solar cell 600X. For example, PV module 502A may include three PV cell strings 602A of 12 solar cells 600 each for a total of 36 solar cells 600. The one or more PV cell strings 602A may each be connected to a pair of input terminals TI of power device 504A. Power device 504A may include converter circuitry 700, control circuitry 516AA, and one or more bypass diodes BD. For example, power device 504A may include 3 bypass diodes BD, each bypass diode BD may be connected between a pair of input terminals TI of power device 504A. A plurality of bypass diodes BD may be connected to each other in series between input terminals TI to form a string of bypass diodes BD. The string of bypass diodes BD may be connected between terminal A and terminal B of converter circuitry 700. Terminal C and terminal D of converter circuitry 700 may be connected to output terminals TS of power device 504A. Control circuitry 516AA may be part of or connected (physically or communicatively) to converter circuitry 700. As mentioned above, in some cases, the control circuitry 516 may be external to the power device 504. Each bypass diode BD may be configured to bypass a related one of the PV cell strings 602A, for example, if one or more of the solar cells 600 of that PV cell string 602A are shaded, and cause that PV cell string 602A to produce a negative voltage, thereby causing the bypass diode BD to become reverse biased. Control circuitry 516AA may be configured to control an operating point of PV module 502A, which mitigates hot spots and may make the bypass diodes BD redundant. For example, control circuitry 516AA may be configured to control an operating point of PV module 502A such that the PV cell strings 602A would not produce a negative voltage, in which case the bypass diodes would not become reverse biased, thereby alleviating the need for bypass diodes BD. In some examples, control circuitry 516AA may be configured to control an operating point of PV module 502A which mitigates hot spots using data that is available due to the presence of one or more bypass diodes BD in the power device 504A (an example of which is provided below with reference to Fig. 4 and Fig. 18). One or more bypass diodes BD may cause a plurality of peaks in a power curve (e.g., a power-voltage P-V curve) of the PV module 502. Determining that there are a plurality of peaks in a power curve (e.g., a P-V curve) of the PV module 502 may be an indication that there are one or more hot spots related to the PV module 502 and the operating point OP should be set by control circuitry 516 using the hot spot mitigation algorithm.

When there is a reverse bias in a solar cell 600 of a PV cell string 602A such that the solar cell 600 produces a negative voltage, the related bypass diode BD may be configured to be forward biased to bypass the corresponding PV cell string 602A having the reverse biased solar cell 600. Bypass diode BD may be configured to attempt to reduce a temperature of the corresponding PV module 502A due to hot spots since, if the solar cell 600 is shaded and producing negative voltage, then that PV cell string 602 may be bypassed by the bypass diode BD. However, in practice, instead of reducing the temperature of the corresponding PV module 502A due to shading, the bypass diode BD may increase a temperature of the corresponding PV module 502A since the bypass diode BD conducting may cause a relatively large dissipation of power that results in a relatively great temperature that may affect the corresponding PV module 502A. Thus, the bypass diode BD might not resolve the issue of the shaded solar cell 600 increasing a temperature of the corresponding PV module 502A due to shading and creating a hot spot. Another solution may be to try to avoid the bypass diode BD from becoming forward biased at all by preventing the solar cell 600 from producing a negative voltage. Control circuitry 516AA may be configured to operate in a hot spot mitigation mode of operation to control the power output of the PV module 502A to prevent the shaded solar cell 600 from becoming reverse biased, thereby preventing the shaded solar cell from becoming a power sink that will dissipate energy into heat and create a hot spot and increase the temperature of the PV module 502A. Control circuitry 516AA may be configured to maintain all of the solar cells 600, even the shaded ones forward biased to produce a positive voltage by setting an operating point that lowers the output power of the PV module 502A to maintain the solar cells 600 forward biased and producing a positive voltage and prevent the solar cells 600 from producing a negative voltage and becoming a hot spot. Control circuitry 516AA may use a hot spot mitigation algorithm to set the operating point according to a second-order derivative of the I-V curve. Control circuitry 516AA may set the operating point by determining one or more zero crossings of the second-order derivative of the I-V curve. Since control circuitry 516AA can control the operation of the solar cells 600 of the PV module 502A and prevent the solar cells 600 from becoming reverse biased and producing a negative voltage, power system 500 may have power modules 506 without any bypass diodes BD, as shown, for example, in Fig. 6B.

Reference is now made to Fig. 6B, which shows a power module 506B without bypass diodes BD. One or more of the power modules 506 of power system 500 of Fig. 5 may be power module 506B. The one or more series strings 514 of power system 500 may include one or more power modules 506B with a power device 504B that does not include a bypass diode BD as shown in Fig. 6B. Power device 504B may be similar to power device 504A in that both of them may include any appropriate power converter circuitry 700, however, power device 504A may include one or more bypass diodes BD while power device 504B does not. Power device 504B might not require any bypass diodes BD since control circuitry 516AB may be configured to control power device 504B to operate the PV module 502B in a hot spot mitigation mode of operation. In the hot spot mitigation mode of operation, the operating point of the PV module 502B may be set based on a hot spot mitigation algorithm to produce a reduced power output and prevent over-heating of the PV module 502B. The hot spot mitigation mode of operation may prevent the one or more solar cells 600 of PV module 502B from becoming reverse biased and alleviate the need for bypass diodes BD, which may become forward biased as a result of one or more solar cells 600 becoming reverse biased from producing a negative voltage. Solar cells 600 of PV module 502B may all be connected together in series in a single string without any connections to bypass diodes BD. A pair of output terminals TO and a pair of input terminals TI may be used to connect the PV module 502B to the power device 504B. The string of solar cells 600 may be effectively connected between terminal A and terminal B of converter circuitry 700. Terminal C and terminal D of converter circuitry 700 may be connected to output terminals TS of power device 504A. Control circuitry 516AB may be part of or connected (physically or communicatively) to converter circuitry 700.

Reference is now made to Fig.7, which shows an example power converter circuitry 700. Power converter circuitry 700 may include one or more power conversion circuits 702 for converting an input power to an output power. In the example of Fig. 7, the one or more power conversion circuits 702 may include buck + boost converter circuitry, also referred to herein as cascaded buck-boost converter circuitry. The buck + boost converter circuitry may include a plurality of switches Q1, Q2, Q3, Q4, an inductor L, and a plurality of capacitors C1, C2. Power converter circuitry 700 includes a pair of input terminals including terminal A and terminal B, and a pair of output terminals including terminal C and terminal D. Power converter circuitry 700 may be configured to convert an input voltage V1 at input terminals A, B to an output voltage V2 at output terminals C, D. Power converter circuitry 700 may include one or more sensors 704 for sensing one or more parameters, such as current, voltage, power, temperature, radiance, etc. Power converter circuitry may be connected to control circuitry 516X, which may be any of the control circuitry 516 described herein. For example, control circuitry 516X may be power device control circuitry 516A, system power device control circuitry 516B, external control circuitry 516C, etc. Control circuitry 516X may be configured to control the duty cycle of one or more switches of the converter circuitry 700. For example, voltage V2 may be a substantially fixed voltage with a relatively constant value, and control circuitry 516X may be configured to control the duty cycle of one or more switches of the converter circuitry 700 to raise or lower the value of voltage V1.

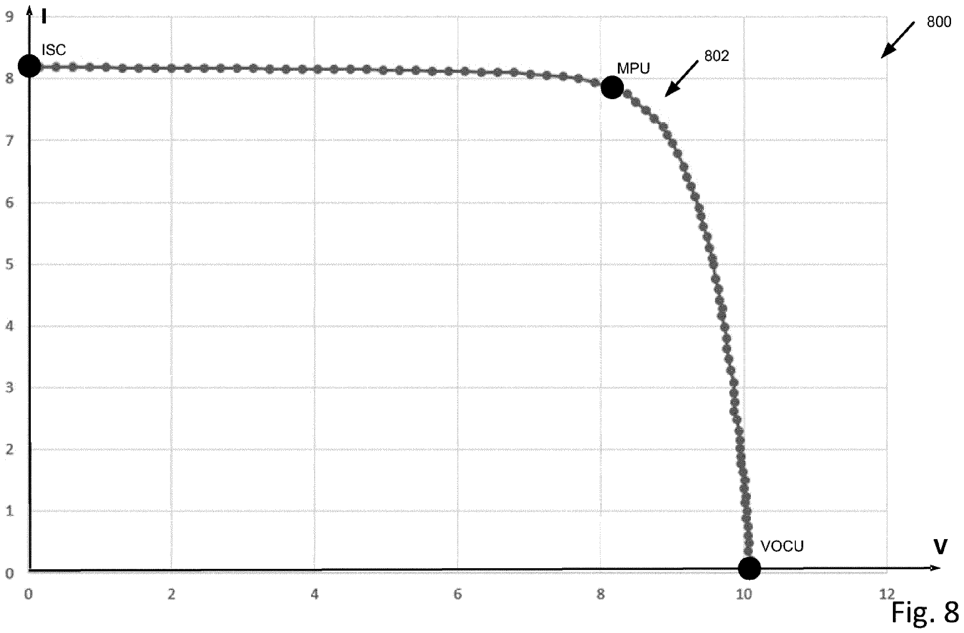

Reference is now made to Fig. 8, which shows a graph 800 of the I-V curve 802 of one or more unshaded solar cells 600 of a PV module 502. The unshaded solar cells 600 have a maximum power point MPU of Iout × Vout = about 7.9 A × about 8.1 V = about 63.99 w.

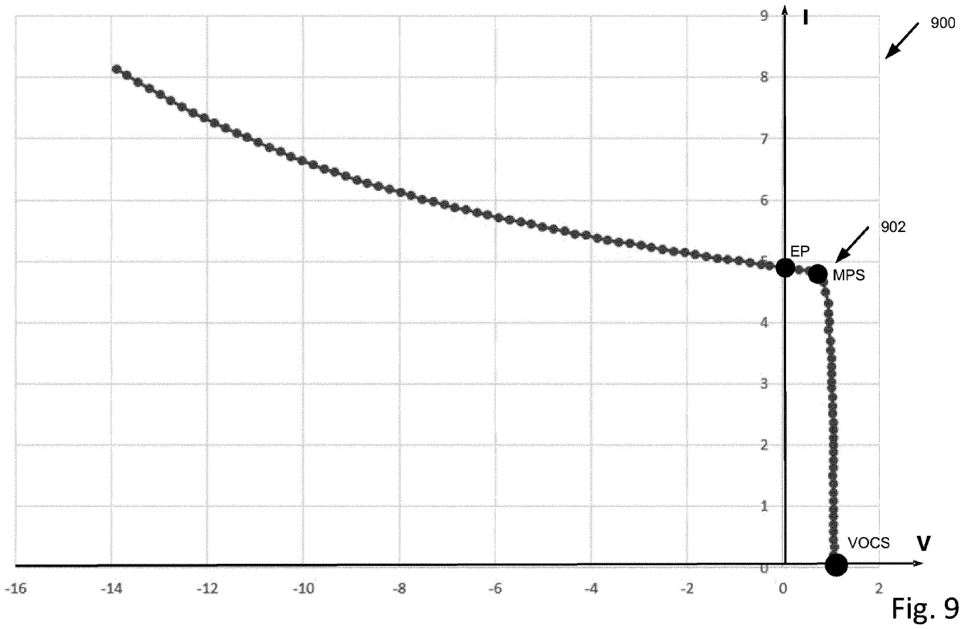

Reference is now made to Fig. 9, which shows a graph 900 of the I-V curve 900 of one or more shaded solar cells 600 of a PV module 502. The shaded solar cells 600 may have a maximum power point MPS of Iout × Vout = about 4.8 A × about 1 V = about 4.8 w. The maximum power point MPS of the shaded cells 600 (about 4.8 w) may be relatively much lower than the maximum power point MPU of the unshaded cells (about 63.99 w). The shaded solar cells 600 may also have an evasive point EP at which the shaded solar cells 600 are producing Vout = about 0 V or a very low voltage, but are not producing negative voltage. When the current Iout of the shaded solar cells 600 is equal to or less than the evasive point EP current, then the one or more shaded solar cells 600 may be producing positive voltage and operating as a power source. When the current is greater than the evasive point EP current, then the one or more shaded solar cells 600 may be producing a negative voltage and operating as a power load. The range of positive voltages, from Vout_shaded = about 0 V to Vout_shaded = about 1 V, of the shaded I-V curve 902 may be much closer to the origin point (Vout_shaded = 0 V, Iout_shaded = 0 A) of the shaded I-V curve 902 compared to the range of positive voltages, from Vout_unshaded = about 0 V to Vout_unshaded = about 10 V, of the unshaded I-V curve 802. For example, the unshaded I-V curve 802 may have a maximum open circuit voltage VOCU of about 10 V, whereas the shaded I-V curve 902 may have a maximum open circuit voltage VOCS of about 1 V. For example, as shown on the shaded I-V curve 902, when the current of the shaded solar cells 600 is exactly the maximum power point MPS current of about 4.8 A, then the shaded solar cells 600 may produce a positive voltage of about 1 V.

When the current of the shaded solar cells 600 is less than the maximum power point MPS current of about 4.8 A (e.g. the current of the shaded solar cells 600 is about 3.8 A), then the shaded solar cells 600 may also produce a positive voltage of about 1 V. When the current of the shaded solar cells 600 is greater than the maximum power point MPS current of about 4.8 A and greater than the evasive point EP current of about 4.9 A, e.g. the current of the shaded solar cells 600 is about 5.8 A, then the shaded solar cells 600 may produce a negative voltage of about -7 V. As shown on the shaded I-V curve 902, for the range of currents between about 3.8 A to about 5.8 A the range of voltages may be about 1 V to about -7 V. This range of currents for currents that are near the maximum power point MPS current (within about 1 A of the maximum power point current), from about 3.8 A to about 5.8 A may include positive voltages (where the shaded solar cell 600 is a source) and negative voltages (where the shaded solar source 600 is a load).

When the shaded solar cell 600 is producing negative voltage, the shaded solar cell 600 may be considered a hot spot since the solar cell 600 is a drain and a power sink that is dissipating electrical energy as heat (thermal energy). For the range of currents between about 3.8 A to about 5.8 A, the range of negative voltages may be relatively great compared to the range of positive voltages (e.g. the positive voltages may range from slightly greater than 0 V to about 1 V, a range of about 1 volt, and the negative voltages may range from slightly less than 0 V to about -7 V, a range of about 7 volts).

Operating the PV panel 502 at about the maximum power point MPS, current of the shaded cells 600 (e.g., within about 1 A of the maximum power point MPS current) may risk the shaded cells 600 producing a relatively great negative voltage. In practice, the shaded I-V curve 902 of the one or more shaded solar cells 600 as shown in Fig. 9 and the unshaded I-V curve 802 of the one or more unshaded solar cells 600 as shown in Fig. 8 might not be measured and may be unknown. Therefore, the evasive point EP of the shaded I-V curve 902 may be unknown.

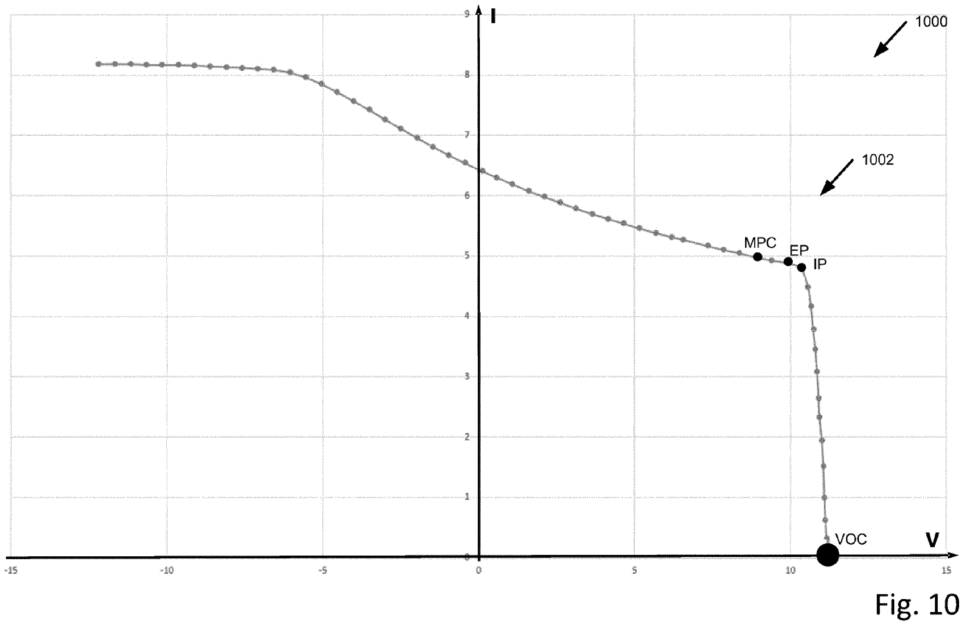

Obtaining the shaded I-V curve 902 of the shaded solar cells 600 as shown in Fig. 9 and the unshaded I-V curve 802 of the unshaded solar cells 600 as shown in Fig. 8 may require measurement and analysis at the level of a solar cell 600, and may be difficult to obtain (it may be relatively difficult or costly to measure the characteristics of the electrical parameters produced at the solar cell level for each solar cell 600). An example of the combined I-V curve 1002 of the PV module 502 that includes one or more shaded solar cells 600 and one or more unshaded solar cells 600 is shown in Fig. 10. Obtaining the combined I-V curve 1002 of the PV module 502 that is the combination of the shaded I-V curve 902 of the shaded solar cells 600 and the unshaded I-V curve 802 of the unshaded solar cells 600 may require measurement and analysis at the level of a PV module 502, which may be relatively easier to obtain (e.g., it may be relatively easier to measure the characteristics of the electrical parameters produced at the PV module level for each PV module 502 than it is to measure at the solar cell level). In theory, if each solar cell 600, or every two solar cells 600, were given a bypass diode BD, then when the shaded solar cell 600 or two shaded solar cells 600 were producing a negative voltage, the solar cell level bypass diode could bypass those one or more shaded solar cells 600 that were acting as power sinks to dissipate energy into heat, and the solar cell level bypass diode(s) could prevent a hot spot in the PV module 502. However, bypassing one solar cell 600 or two solar cell 600 for a relatively large plurality of solar cells 600 (e.g., about 36 solar cells 600 in a PV module 502) may be relatively difficult or costly. In many cases, bypass diodes BD are arranged to bypass a plurality of solar cells 600 connected as a PV cell string 602 (e.g., one bypass diode BD per every 10 or 12 solar cells 600). For example, for a PV module 502 of about 36 solar cells 600 there may be 3 PV cell string level bypass diodes BD (e.g. one PV cell string level bypass diode BD for each 12 solar cells 600 of the PV module 502).

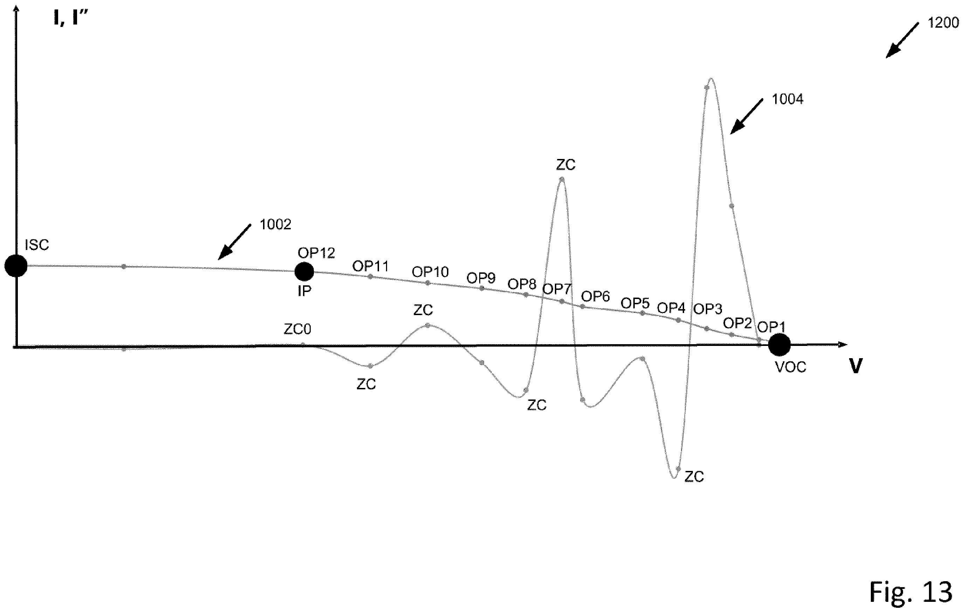

Reference is now made to Fig. 10, which shows a graph of an I-V curve 1002 of a PV module 502 that includes one or more shaded solar cells 600 and one or more unshaded solar cells 600. The evasive point EP of the shaded solar cells 600 is shown on the combined I-V curve 1002 but may be unknown. The evasive point EP shown in Fig. 9 might not be known since the output of shaded solar cells 600 and the output of unshaded solar cells 600 combine to make the known combined I-V curve 1002 of Fig. 10. Fig. 10 also shows the inflection point IP where the I-V curve 1002 bends, a point at which the curvature of the combined I-V curve 1002 changes sign. The inflection point IP may be a point on the combined I-V curve 1002 where the I-V curve 1002 changes from being concave (concave downward) to convex (concave upward). The inflection point IP shown in Fig. 9 might also not be known. The second-order derivative of the combined I-V curve 1002 may be used to find the inflection point IP or a zero crossing close to the inflection point IP. A zero crossing where the second-order derivative of the combined I-V curve 1002 is equal to zero must be passed to change the second-order derivative value from a positive value (concave upward) to a negative value (concave downward) or vice versa. The inflection point IP of the combined I-V curve 1002 may be a point where the second-order derivative value is equal to zero and changes its sign at that point (e.g., from positive to negative or from negative to positive). However, there may be more than one zero crossings that are determined in the second-derivative values of combined I-V curve 1002 (as shown, for example, in Fig. 13). As shown in Fig. 10, the inflection point IP may be relatively close to the evasive point EP. Therefore, even if the evasive point EP is not known, the inflection point IP may be used to help set the operating point of the PV module 502 to help ensure that the solar cells 600 are all producing a positive voltage. Even if the exact inflection point IP is not known, zero crossings of the second-order derivative value of the combined I-V curve 1002 may be used to set the operation of the PV module 502 relatively close to the inflection point IP. Setting the operating point of the PV module 502 at a power output lower than the maximum power point MPC of the PV module may help ensure that none of the solar cells 600 are producing a negative voltage in order to prevent hot spots in the PV module 502. This may increase the life of the PV module 502.

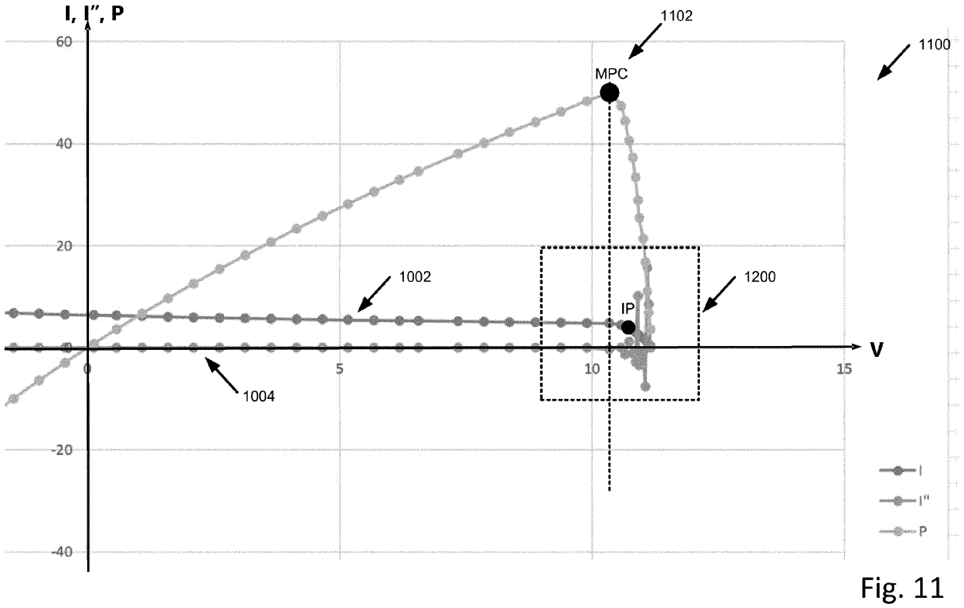

As shown in Fig. 10, the evasive point EP may be a lower power point than the maximum power point MPC of the PV module 502. The inflection point IP may be a lower power point than the evasive point EP. For example, the power of the PV module 502 at the maximum power point MPC may be Iout × Vout = about 5 A × about 9.8 V = about 49 w. The power of the PV module 502 at the evasive point EP may be Iout × Vout = about 4.9 A × about 9.9 V = about 48.5 w, less than the power at the maximum power point MPC. The power of the PV module 502 at the inflection point IP may be Iout × Vout = about 4.5 A × about 9.5 V = about 47.25 w, less than the power at the maximum power point MPC and less than the power at the evasive point EP. Thus, the evasive point EP and the inflection point IP may be different than the maximum power point MPC of the PV module 502. This is also shown in Fig. 11.

Reference is now made to Fig. 11, which shows the graph of an I-V curve 1002 of the PV module 502 that includes one or more shaded solar cells 600 and one or more unshaded solar cells 600, as well as the graph of the second-order derivative I"-V curve 1004, and the graph of a power curve (e.g., the P-V curve 1102) of the PV module 502. As also shown in Fig. 11, the maximum power point MPC, which is the highest point on a power curve (e.g., the P-V curve 1102), may be different than, although relatively close to, the inflection point IP. For example, when the output current of the PV module 502 is equal to the maximum power point MPC current of the PV module 502 (e.g. about 5 A), it might not be known if one or more shaded solar cells 600 are producing positive voltage and operating as a power source or if the one or more shaded solar cells 600 are producing a negative voltage and operating as a power load since the maximum power point MPC current of the PV module 502 may be greater than the evasive point EP current.

As shown in Fig. 9, when the shaded solar cells 600 are near their maximum power point MPS, then they may be also close to their evasive point EP and close to producing a relatively great negative voltage, which may result in a relatively great hot spot of the PV module 502. As described above, in a relatively small range of current, e.g., a range of about 2 A, there may be a relatively great difference in voltage, e.g., a range of about 8 V, including a relatively great negative voltage of about -7 V. However, if the operating point of the PV module 502 is controlled to maintain the output current Iout of the PV module 502 below the evasive point EP current of the shaded solar cells 600, then the overall power produced by the PV module 502 may be less than if the PV module 502 were operating at the maximum power point MPC, but all of the solar cells 600, including the shaded solar cells 600 may be controlled to produce a positive voltage and prevent the PV module 502 from having any hot spots. Ideally, the operating point to choose for the PV module 502 for this goal of no hot spots and all solar cells 600 producing a positive voltage would be the exact evasive point EP, or the exact inflection point IP, but finding the exact evasive point EP or the exact inflection point IP may be very difficult. In theory, the exact inflection point IP may be found by taking the second-order derivative of the PV module I-V curve 1002 and finding when the second-order derivative is equal to zero. However, practically, in the real world there may be noise when taking measurements and finding the exact point where the second-order derivative value is equal to zero may be very difficult.

Another way to find an operating point near the inflection point IP may be to determine where there are zero crossings in the second-order derivative of the PV module I-V curve 1002 and select a zero crossing relatively close to the inflection point IP to set the operating point of the PV module 502. This method may also account for noise. As mentioned above, a zero crossing may be when the second-order derivative crosses the zero value and goes from a positive value to a negative value, or from a negative value to a positive value. Control circuitry 516 may be configured to operate in a hot spot mitigation mode of operation in which second-order derivative values related to the combined I-V curve 1002 are used to determine zero crossings and set an operating point of the PV module 502 so that the PV module 502 operates not at the maximum power point MPC of the PV module 502 generating a maximum power, but rather the PV module 502 operates at a reduced power lower than the maximum power with a reduced current lower than the maximum power current but with an increased voltage, that may help to prevent hot spots in the PV module 502. One or more filters may be used to help filter out noise and help determine one or more zero crossings in the second-order derivative values related to the combined I-V curve 1002 and select a zero crossing has a relatively low associated voltage and is relatively close to the inflection point IP.

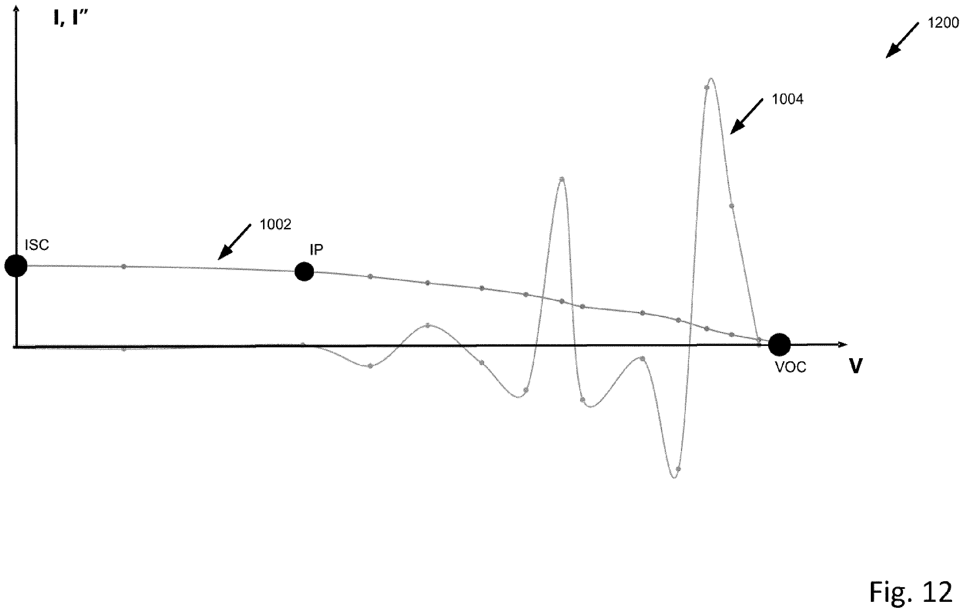

Reference is now made to Fig. 12 and Fig. 13, which show a zoomed in section 1200 of the graph of the combined I-V curve 1002 of the PV module 502 that includes one or more shaded solar cells 600 and one or more unshaded solar cells 600. Fig. 12 and Fig. 13 also include a graph of the second-order derivative I"-V curve 1004 related to the combined I-V curve 1002. As shown in Fig. 12 and Fig. 13, as the combined I-V curve 1002 of the PV module 502 approaches the maximum open circuit voltage (VOC) where the output current is equal to about 0, there are several zero crossings ZC in the second-order derivative I"-V curve 1004. Ideally, the operating point to choose for the PV module 502 would be based on the zero crossing ZC where the voltage is equal to the inflection point IP voltage, for example, the operating point associated with the zero crossing ZC0 shown in Fig. 13, however, this operating point may be difficult to determine (especially considering noise around the zero current value when taking real life measurements). Ideally, the inflection point IP could be found by determining where the second-order derivative I"-V curve 1004 is equal to 0 (e.g., the exact zero crossing ZC0), but it may be very difficult or unlikely to determine a second-derivative value of the second-order derivative I"-V curve 1004 equal to exactly 0. It may be relatively easier to determine whether there was a zero crossing in the second-order derivative I"-V curve 1004 (e.g., whether the zero line was crossed by the second-order derivative I"-V curve 1004). As described below, one or more filters may also be used to help determine whether there was a zero crossing in the second-order derivative I"-V curve 1004. Fig. 13 shows a plurality of operating points OP1 - OP12 which may be used to determine an operating point OP for the PV module 502 that helps ensure that the solar cells 600 of the PV module 502 are all producing a positive voltage, and that the output voltage is a relatively lower voltage, relatively closer to the inflection point IP, to also provide a greater power than if the output voltage is a relatively greater voltage, relatively closer to the open circuit voltage VOC. Some of the graphs herein show some of the operating points OP but there may be more OPs.

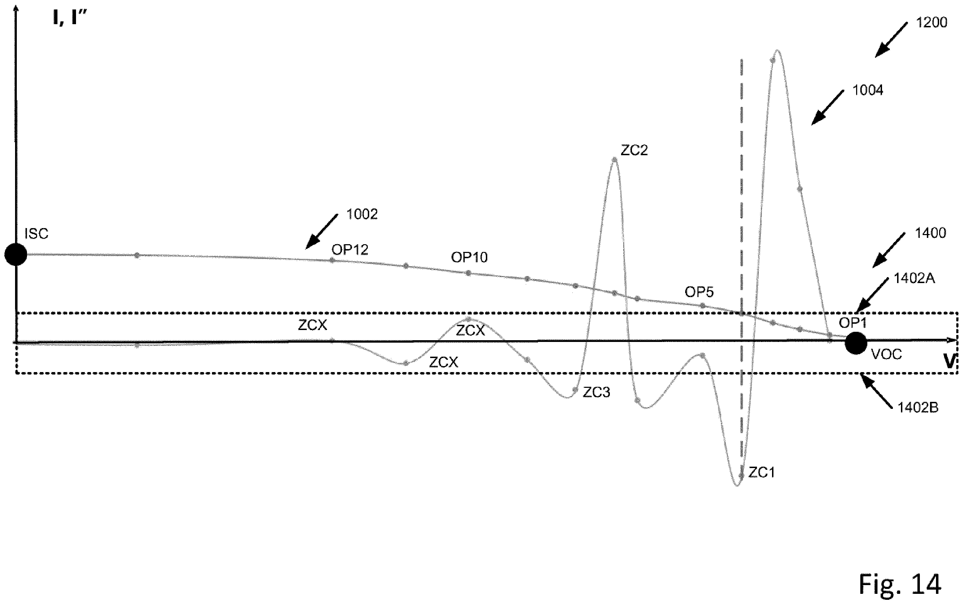

Reference is now made to Fig. 14, which shows a current axis filter 1400 that may be used to determine which zero crossings ZC should be considered when determining an operating point OP for the PV module 502 to maintain all of the solar cells 600 producing a positive voltage so there are no hot spots in the PV module 502. Current axis filter 1400 is shown in Fig. 14 as a filter for second-order derivative values on the vertical axis (the output current axis I). The current axis thresholds 1402A, 1402B of the current axis filter 1400 may determine which zero crossings ZC of the second-order derivative values are considered a zero crossing for selecting the operating point OP using the hot spot mitigation algorithm and which are not. Thus, the current axis thresholds 1402A, 1402B may be used to determine which second-order derivative values on the vertical axis definitively cross the zero value for the current axis, and are not likely to be false zero crossings ZC due to noise. For example, based on the current axis thresholds 1402A, 1402B of the current axis filter 1400 shown in Fig. 14, the zero crossings ZCX would not be considered zero crossings for selecting the operating point OP using the hot spot mitigation algorithm, since the zero crossings ZCX have an absolute value that is less than the absolute value of the respective negative current axis threshold 1402B or positive current axis threshold 1402A (the negative values being compared to the negative threshold 1402B and the positive values being compared to the positive threshold 1402A). Zero crossings ZC1, ZC2, ZC3 are greater than the current axis thresholds 1402A, 1402B of the current axis filter 1400 (the negative values being compared to the negative threshold 1402B and the positive values being compared to the positive threshold 1402A) and would be considered zero crossings ZC for selecting the operating point OP using the hot spot mitigation algorithm. Note that in this example the zero crossings ZC may be determined by starting at an operating point OP at or near the open circuit voltage VOC of the PV module 502 (Vout = about Vmax, Iout = about 0) and checking additional operating points OP moving towards the short circuit current ISC (Vout = about 0, Iout = about Imax). Thus, the hot spot mitigation operating point OP may be determined by starting at about zero output current Iout = about 0 A, and ramping up the output current of the PV module 502 for each measurement along the I-V curve and calculation of the second-order derivative value. For example, the output current of the PV module 502 may be increased by increasing a duty cycle of converter circuitry 700 of a power device 504 using control circuitry 516. In this example, the first zero crossing ZC starting from the open circuit voltage VOC would be ZC1. Zero crossing ZC1 may be the first point in the second-order derivative I"-V curve 1004 where the calculated value of the second-order derivative goes from a positive value to a negative value, and definitively crosses the zero line beyond the negative current axis threshold 1402B value of the current axis filter 1400. Examples of current axis thresholds 1402A, 1402B values of the current axis filter 1400 may be, for example, any appropriate value between slightly greater than about 0 and less than about 3. For example, current axis thresholds 1402A, 1402B values may be: 0.5, 0.75, 1, 1.5, 2, 2.5, etc. or any value in that range. The positive current axis threshold 1402A and the negative current axis threshold 1402B may have the same absolute value. For example, the positive current axis threshold 1402A may be 1 and the negative current axis threshold 1402B may be -1. Alternatively, the positive current axis threshold 1402A and the negative current axis threshold 1402B may have different absolute values. For example, the positive current axis threshold 1402A may be 1.5 and the negative current axis threshold 1402B may be -1.25.

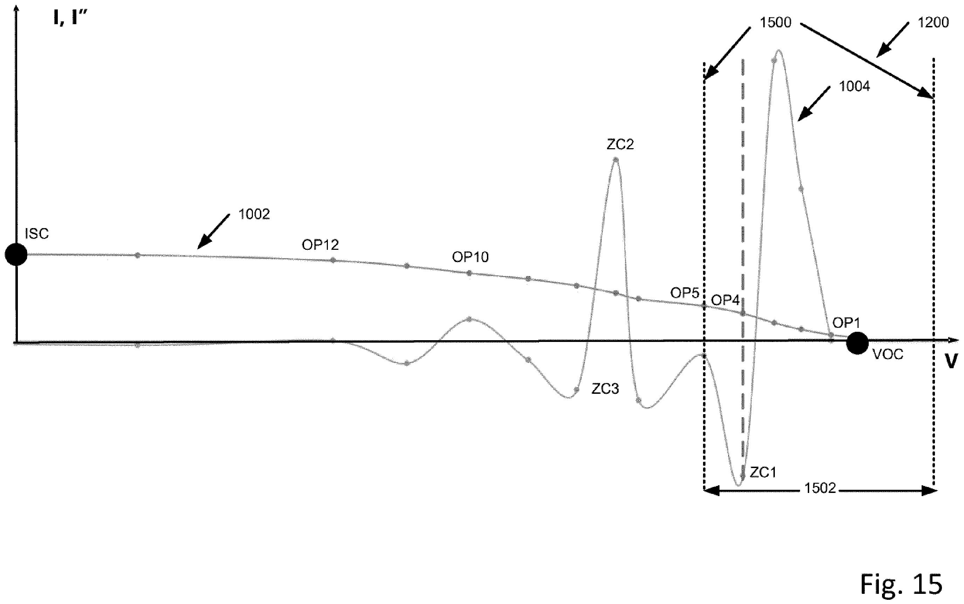

Reference is now made to Fig. 15, which shows a voltage axis filter 1500 that may be used to determine whether a voltage axis threshold value past a determined zero crossing ZC has been passed when setting an operating point OP for the PV module 502 to maintain all of the solar cells 600 producing a positive voltage so there are no hot spots in the PV module 502. Voltage axis filter 1500 is shown in Fig. 15 as a filter for zero crossings ZC on the horizontal axis (e.g., the output voltage axis V). For example, the voltage axis threshold 1502 of the voltage axis filter 1500 may be used to determine whether a threshold value has been passed since a previously determined zero crossing ZC to help ensure that there are no other zero crossings within that threshold range of the voltage axis filter 1500 and that the output voltage of the determined zero crossing ZC has a relatively low associated voltage relatively close to the voltage of the inflection point IP. For example, as shown in Fig. 15, on the second-order derivative I"-V curve 1004 near the open circuit voltage VOC there may be a plurality of zero crossings. The voltage axis filter 1500 may help ensure that the zero crossing ZC that is selected to set the operating point OP of the PV module 502 is close to the inflection point IP (where the second-order derivative values begins to settle down and converge) and further away from the open circuit voltage VOC (where there are more and wilder deviations in the second-order derivative I"-V curve 1004). For example, when moving from the open circuit voltage VOC towards the inflection point IP after the zero crossing ZC1 there are other zero crossings ZC in the second-order derivative I"-V curve 1004. When setting an operating point OP based on a determined zero crossing ZC, ideally there should be no more zero crossings ZC after it. Setting an operating point OP using a voltage axis filter 1500 helps ensure that a threshold value has been passed from the one or more previously determined zero crossings ZC, and that there are no significant upcoming zero crossings ZC. For example, based on the voltage axis threshold 1502 value of the voltage axis filter 1500 shown in Fig. 15, the operating point OP5 would not be used to help set the operating point OP of the PV module 502 using the hot spot mitigation algorithm since the voltage axis threshold 1502 of the voltage axis filter 1500 has not been passed since the zero crossing ZC1 was identified. Thus, the difference between the voltage value VoutOP4 related to the associated operating point OP4 of zero crossing ZC1 and the voltage value VoutOP5 of operating point OP5 (VoutOP4-VoutOP5) are within the range of voltage axis threshold 1502 (e.g., the absolute value of the voltage axis threshold 1502 value). Thus, VoutOP4 - VoutOP5 < Vth. For example, if the difference was greater than the threshold value, then operating point OP5 would be used to help set the operating point OP of the PV module 502, e.g., by validating that the operating point OP4 of zero crossing ZC1 is selected to set the operating point OP of the PV module 502 (in that example OP_PV module = OP4 of zero crossing ZC1). Note that in the example shown in Fig. 15, the operating points OP before zero crossing ZC1 (operating points OP1, OP2, OP3) would also not be used to set the operating point OP of the PV module 502 since a zero crossing ZC has not even been passed at those operating points (the first zero crossing ZC1 is identified at operating point OP4). Examples of voltage axis threshold 1502 values of the voltage axis filter 1500 may be, for example, any appropriate value between slightly greater than about 0 V and less than about 3 V. For example, the voltage axis threshold 1502 value may be: 0.5 V, 0.75 V, 1 V, 1.5 V, 2 V, 2.5 V, etc. or any value in that range. As mentioned above, the zero crossings ZC may be determined starting at or near the open circuit voltage VOC (Vout = about Vmax, Iout = about 0) and moving towards the short circuit current ISC (Vout = about 0, Iout = about Imax), starting at about zero output current Iout = about 0 A and ramping up the output current for each measurement and calculation of the second-order derivative. The zero crossings ZC may be identified using the current axis filter 1400 shown in Fig. 14. Setting the operating point OP for the PV module 502 based on the zero crossings ZC may be done using both the current axis filter 1400 shown in Fig. 14 and the voltage axis filter 1500 shown in Fig. 15. Using both the current axis filter 1400 and the voltage axis filter 1500 may help ensure that the selected zero crossing ZC used to set the operating point OP of the PV module 502 is relatively close to the inflection point IP of the combined I-V curve 1002 of the PV module 502, so that the PV module 502 produces a less than maximum power output and maintains all of the solar cells 600 of the PV module 502 producing a positive voltage, thereby mitigating hot spots of the PV module 502.

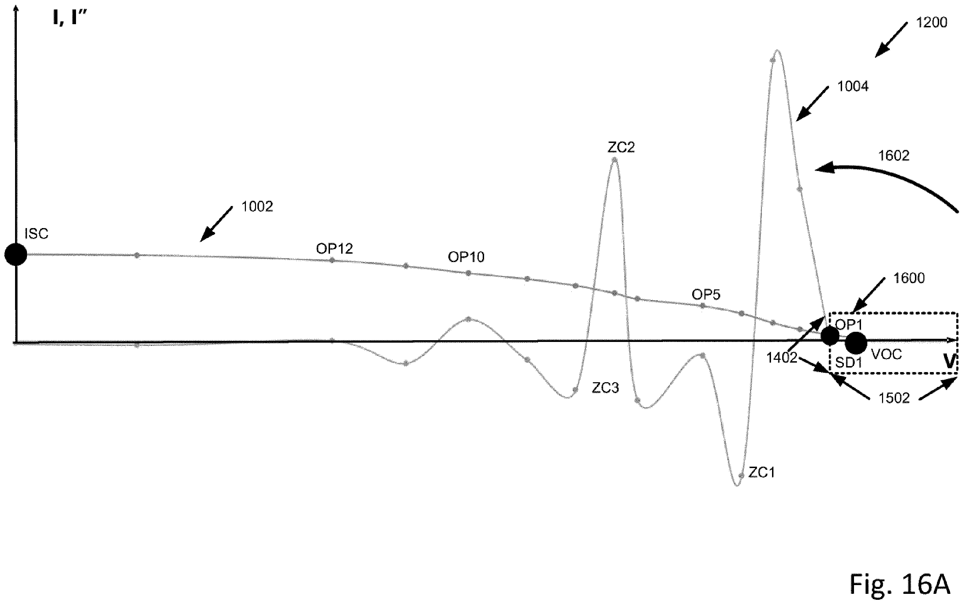

Fig. 16A shows a filter window 1600 that may be used by control circuitry 516 to set an operating point OP for the PV module 502 to maintain all of the solar cells 600 producing a positive voltage so there are no hot spots in the PV module 502 using the hot spot mitigation algorithm. Filter window 1600 may include both the current axis thresholds 1402A, 1402B of current axis filter 1400 and the voltage axis threshold 1502 of voltage axis filter 1500.

An example of setting the operating point OP for the PV module 502 using filter window 1600 will be explained below using the examples of Figs. 16A to 16L.

In Fig. 16A, it is shown that operating point OP1 is not used by control circuitry 516 to select the zero crossing ZC to set the operating point OP for the PV module 502 using the hot spot mitigation algorithm, since a zero crossing ZC has not yet been identified in the second-order derivative I''-V curve 1004 and passed by the voltage axis threshold 1502 of filter window 1600. As shown in Fig. 16A and as mentioned above, the first determined zero crossing ZC may be zero crossing ZC1 associated with operating point OP4.

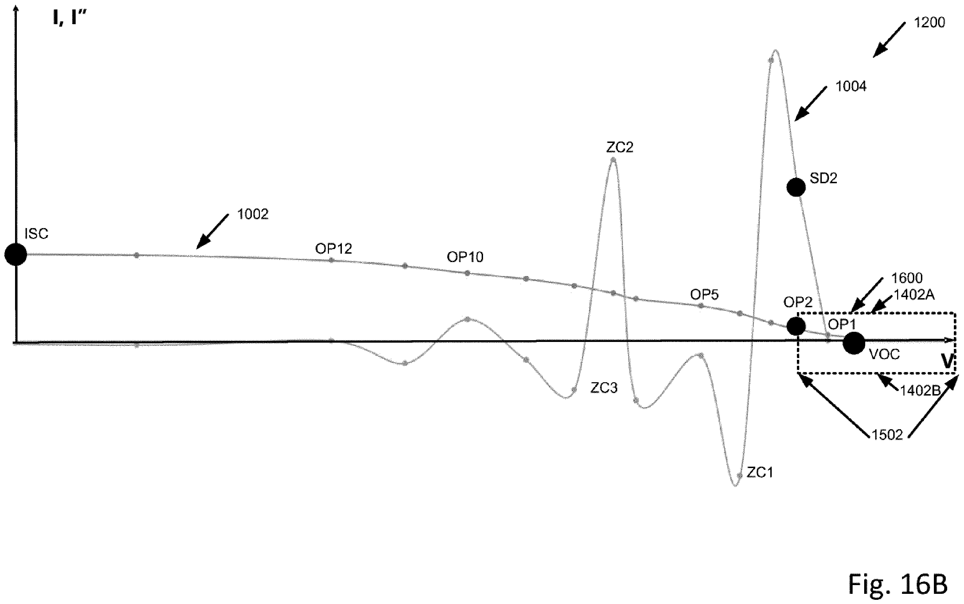

Similarly, as shown in Fig. 16B, operating point OP2 may also not be determined by the control circuitry 516 to select the zero crossing ZC to set the operating point OP for the PV module 502 using the hot spot mitigation algorithm, since a zero crossing ZC has not yet been identified in the second-order derivative I''-V curve 1004 and passed by the voltage axis threshold 1502 of filter window 1600.

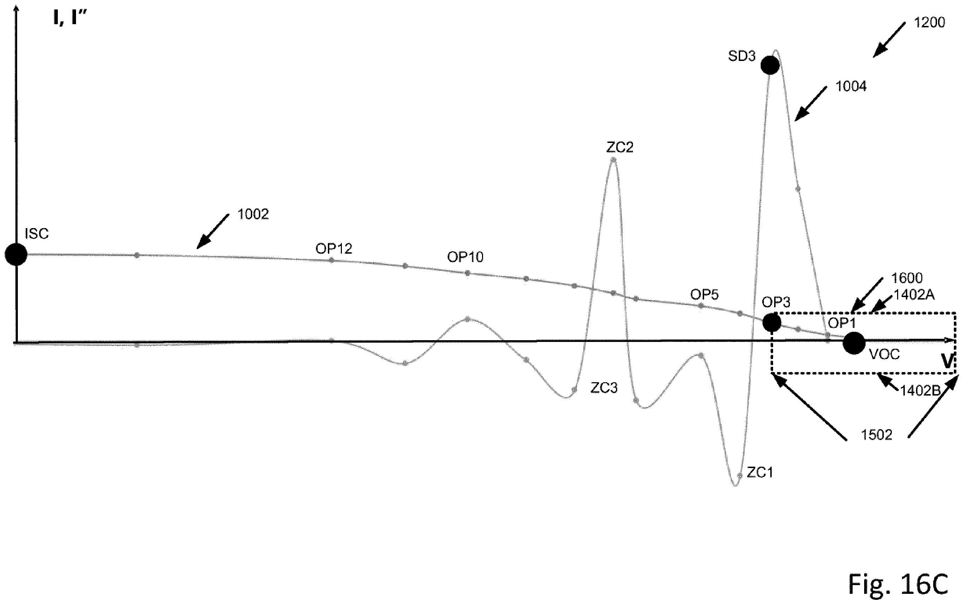

Similarly, as shown in Fig. 16C, operating point OP3 may also not be determined by the control circuitry 516 to select the zero crossing ZC to set the operating point OP for the PV module 502 using the hot spot mitigation algorithm, since a zero crossing ZC has not yet been identified in the second-order derivative I''-V curve 1004 and passed by the voltage axis threshold 1502 of filter window 1600.

In some examples, control circuitry 516 might not determine the second-order derivative value SD for operating points OP1 and OP2. Thus, control circuitry 516 might not determine the second-order derivative value SD1 and the second-order derivative value SD2, since the control circuitry 516 may use measurements from two previous operating points OP in order to determine a second-order derivative value SD related to an operating point OP. Thus, second-order derivative value SD3 associated with operating point OP3 may be the first determined second-order derivative value SD.

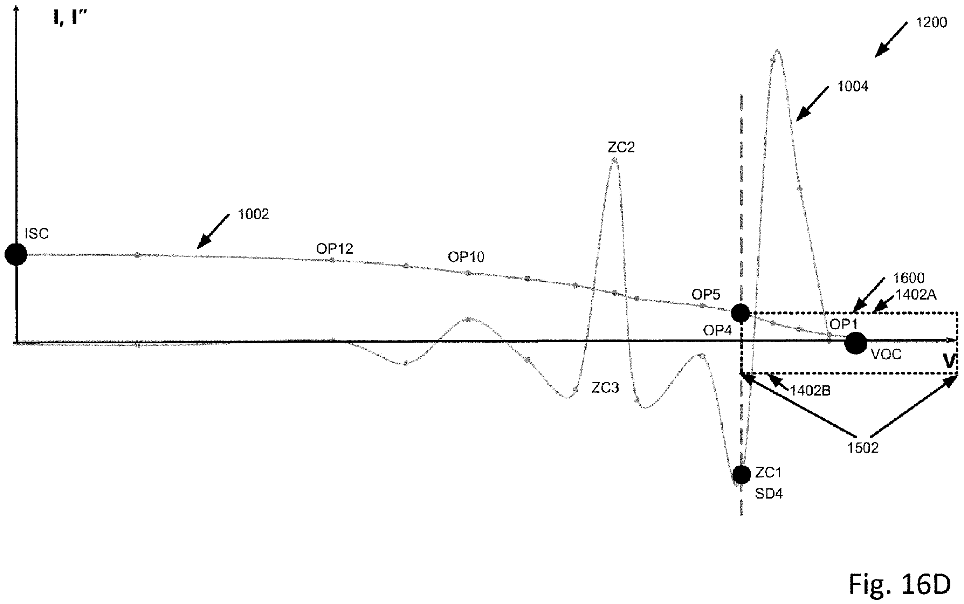

As shown in Fig. 16D, zero crossing ZC1 may be determined by control circuitry 516 with relation to operating point OP4, since the second-order derivative value SD4 is beyond the negative current axis threshold 1402B value of filter window 1600. Additionally, zero crossing ZC1 may be considered a zero crossing ZC since the second-order derivative values have gone from a positive value at second-order derivative value SD3 to a negative value at second-order derivative value SD4. Thus, second-order derivative value SD3 may be positive and second-order derivative value SD4 may be negative. However, as mentioned above, operating point OP4 may not be used by control circuitry 516 to select the zero crossing ZC to set the operating point OP for the PV module 502 using the hot spot mitigation algorithm, since the zero crossing ZC1 itself is identified for operating point OP4 and, therefore, the voltage axis threshold 1502 value since a previous zero crossing ZC has not yet been passed, in part because there was no previously identified zero crossing ZC before zero crossing ZC1.

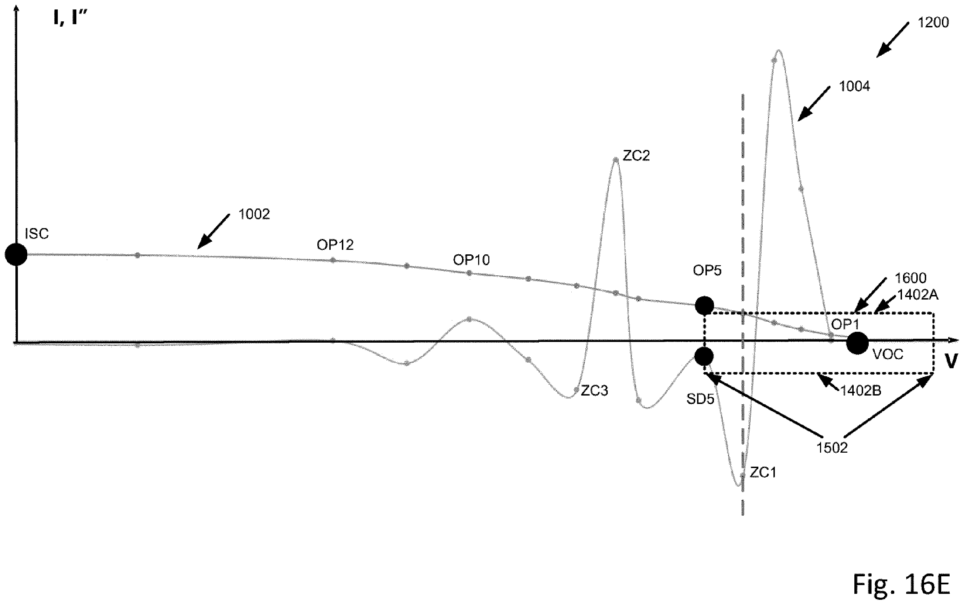

In Fig. 16E, it is shown that operating point OP5 may not be used by control circuitry 516 to select the zero crossing ZC to set the operating point OP for the PV module 502 using the hot spot mitigation algorithm. Although the second-order derivative value SD5 is within the current axis thresholds 1402A, 1402B of filter window 1600, and is not itself considered a zero crossing ZC, and a previous zero crossing ZC has been identified (zero crossing ZC1), however, the voltage axis threshold 1502 value since that previous zero crossing ZC has not yet been passed. Thus, the previous zero crossing ZC1 may be within range of the voltage axis threshold 1502 value of filter window 1600 at operating point OP5. As shown in Fig. 16E, and as mentioned above, the first determined zero crossing ZC is zero crossing ZC1.

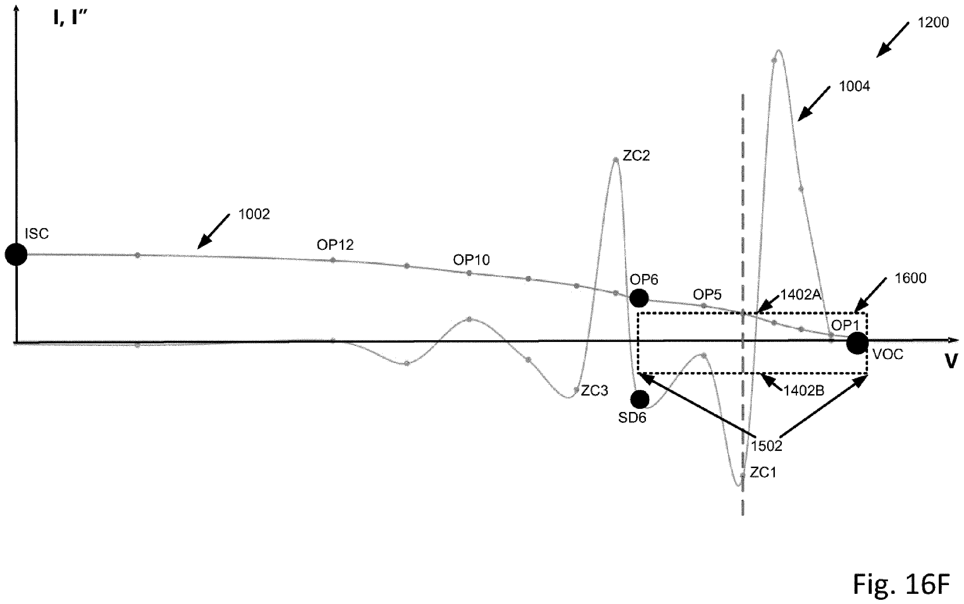

Similarly, as shown in Fig. 16F, operating point OP6 may also not be used by control circuitry 516 to select the zero crossing ZC to set the operating point OP for the PV module 502 using the hot spot mitigation algorithm. The second-order derivative value SD6 may be beyond the current axis thresholds 1402A, 1402B of filter window 1600, but may not be itself considered a zero crossing ZC, since the second-order derivative values have gone from a negative value at second-order derivative value SD5 to a negative value at second-order derivative value SD6. Thus, second-order derivative value SD5 and second-order derivative value SD6 may be both negative. Although the second-order derivative value SD6 is not itself considered a zero crossing ZC, and a previous zero crossing ZC has been identified (zero crossing ZC1), however, the voltage axis threshold 1502 value since that previous zero crossing ZC has not yet been passed. Thus, the previous zero crossing ZC1 may be within range of the voltage axis threshold 1502 value of filter window 1600 at operating point OP6.

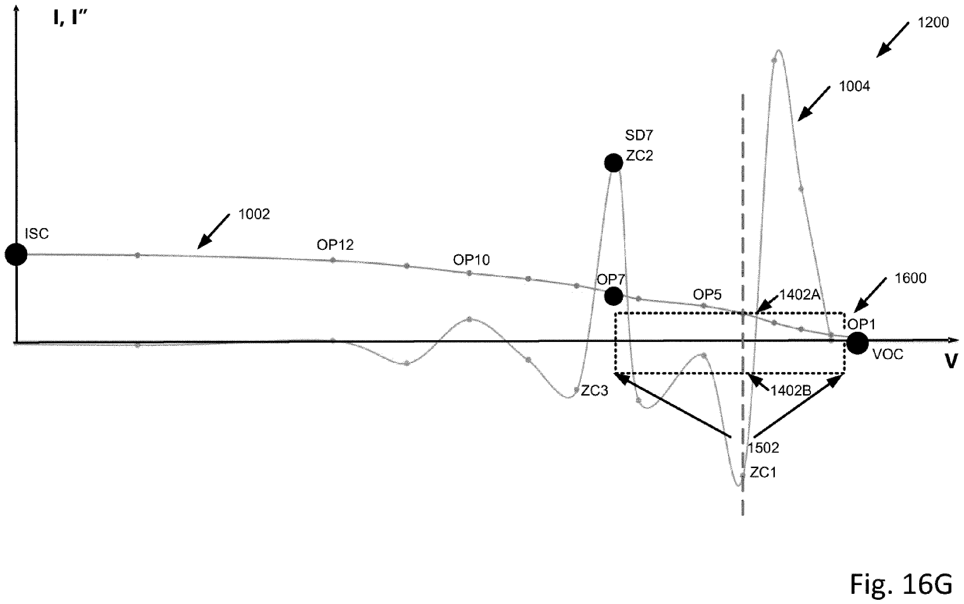

As shown in Fig. 16G, zero crossing ZC2 may be determined by control circuitry 516 with relation to operating point OP7 since the second derivative value SD7 is beyond the positive current axis threshold 1402A value of filter window 1600. Additionally, zero crossing ZC2 may be determined as a zero crossing ZC since the second derivative value SD has gone from a negative value at second-order derivative value SD6 to a positive value at second-order derivative value SD7. Thus, second-order derivative value SD6 may be negative and second-order derivative value SD7 may be positive. However, similar to what was mentioned above, operating point OP7 may not be used by control circuitry 516 to select the zero crossing ZC to set the operating point OP for the PV module 502 since the zero crossing ZC2 itself is identified for that operating point OP7 and the voltage axis threshold 1502 value of the voltage axis filter 1500 since a previous zero crossing ZC (zero crossing ZC1) has not yet been passed (e.g., the previous zero crossing ZC1 is within range of the voltage axis threshold 1502 value of filter window 1600 at operating point OP7).

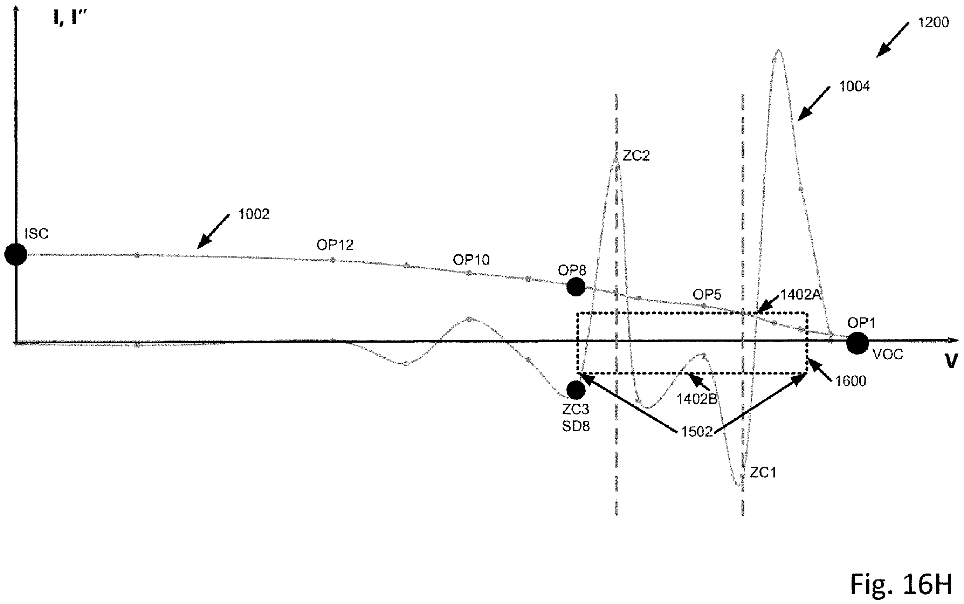

As shown in Fig. 16H, zero crossing ZC3 may be determined by control circuitry 516 with relation to operating point OP8 since the second-order derivative value SD8 is beyond the negative current axis threshold 1402B of filter window 1600. Additionally, zero crossing ZC3 may be determined as a zero crossing ZC since the second-order derivative value SD has gone from a positive value at second-order derivative value SD7 to a negative value at second-order derivative value SD8. Thus, second-order derivative value SD7 may be positive and second-order derivative value SD8 may be negative. However, similar to what was mentioned above, operating point OP8 may not be used by control circuitry 516 to select the zero crossing ZC to set the operating point OP for the PV module 502 using the hot spot mitigation algorithm since the zero crossing ZC3 itself is identified for that operating point OP8 and the voltage axis threshold 1502 value of the voltage axis filter 1500 since a previous zero crossing ZC (e.g., zero crossing ZC2) has not yet been passed (e.g., the previous zero crossing ZC2 is within range of the voltage axis threshold 1502 value of filter window 1600 at operating point OP8, and the first zero crossing ZC1 is also within range of the voltage axis threshold 1502 value of filter window 1600 at operating point OP8).

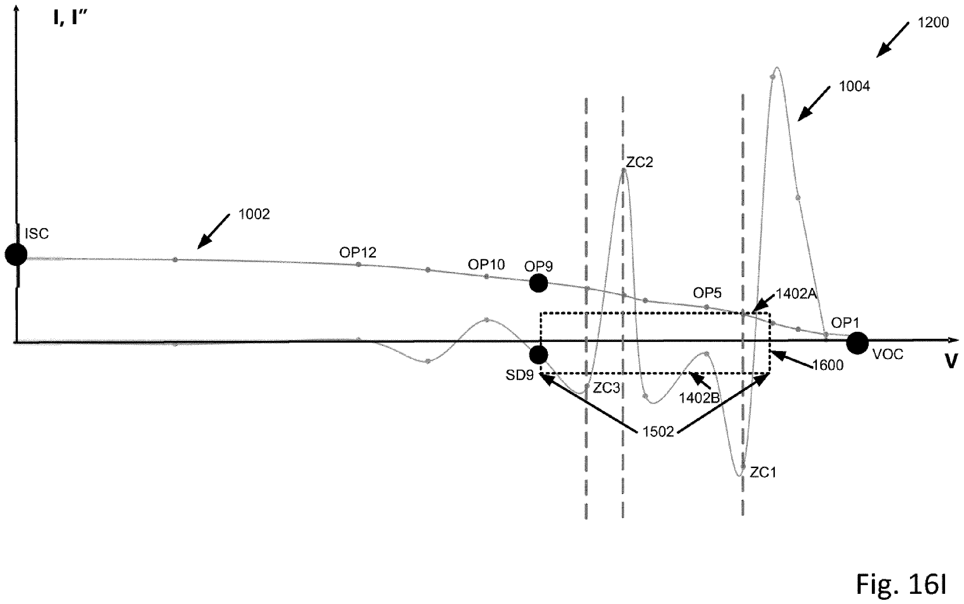

In Fig. 16I, it is shown that operating point OP9 may not be used by control circuitry 516 to select the zero crossing ZC to set the operating point OP for the PV module 502 using the hot spot mitigation algorithm. Although the second-order derivative value SD9 is within the current axis thresholds 1402A, 1402B of filter window 1600, and is not itself considered a zero crossing ZC, and a previous zero crossing ZC has been identified (e.g., zero crossings ZC3, ZC2, ZC1), the voltage axis threshold 1502 value of the voltage axis filter 1500 since that previous zero crossing ZC has not yet been passed (e.g., the previous zero crossing ZC3 is within the voltage axis threshold 1502 value of filter window 1600 at operating point OP9, as well as the first zero crossing ZC1 and the second zero crossing ZC2).

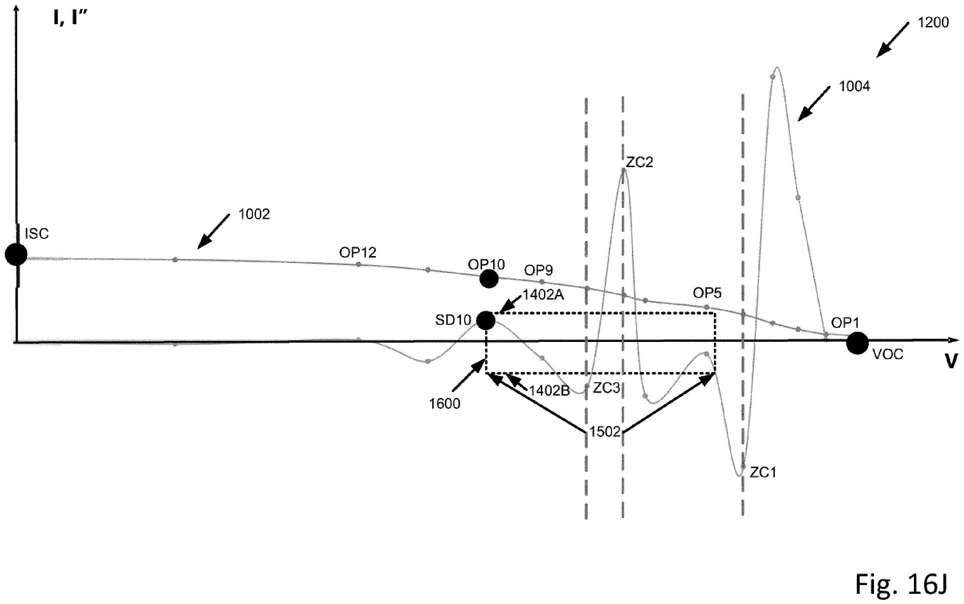

Similarly, as shown in Fig. 16J, operating point OP10 may not be used by control circuitry 516 to select the zero crossing ZC to set the operating point OP for the PV module 502 using the hot spot mitigation algorithm. Although the second-order derivative value SD10 is within the current axis thresholds 1402A, 1402B of filter window 1600, and is not itself considered a zero crossing ZC, and a previous zero crossing ZC has been identified (e.g., zero crossings ZC3, ZC2, ZC1), the voltage axis threshold 1502 value of the voltage axis filter 1500 since that previous zero crossing ZC has not yet been passed (e.g., the previous zero crossing ZC3 is within the voltage axis threshold 1502 value of filter window 1600 at operating point OP9, as well as the second zero crossing ZC2).

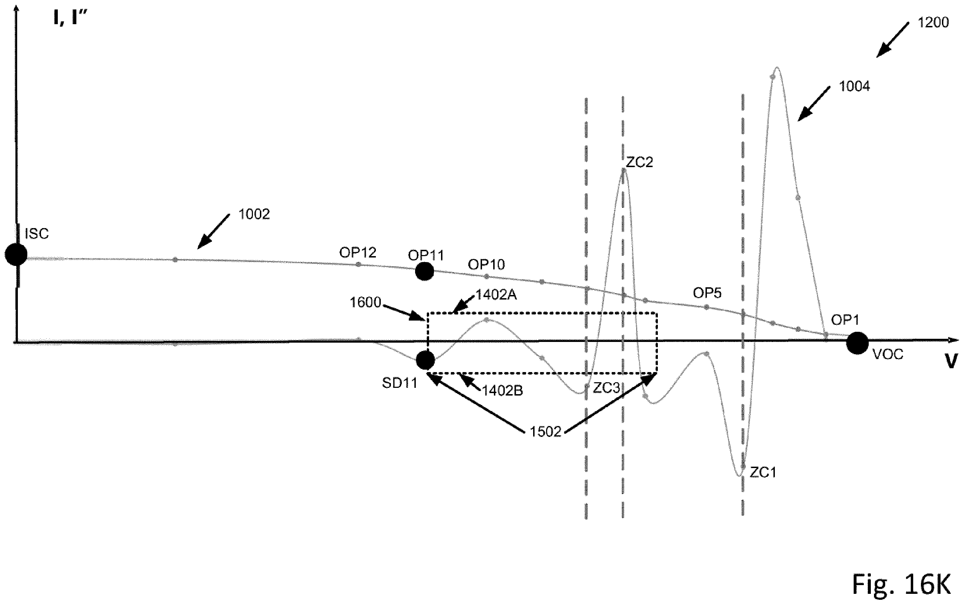

Similarly, as shown in Fig. 16K, operating point OP11 may not be used by control circuitry 516 to select the zero crossing ZC to set the operating point OP for the PV module 502 using the hot spot mitigation algorithm. Although the second-order derivative value SD11 is within the current axis thresholds 1402A, 1402B of filter window 1600, and is not itself considered a zero crossing ZC, and a previous zero crossing ZC has been identified (e.g., zero crossings ZC3, ZC2, ZC1), the voltage axis threshold 1502 value of the voltage axis filter 1500 since that previous zero crossing ZC has not yet been passed (e.g., the previous zero crossing ZC3 is within the voltage axis threshold 1502 value of filter window 1600 at operating point OP9, as well as the second zero crossing ZC2).

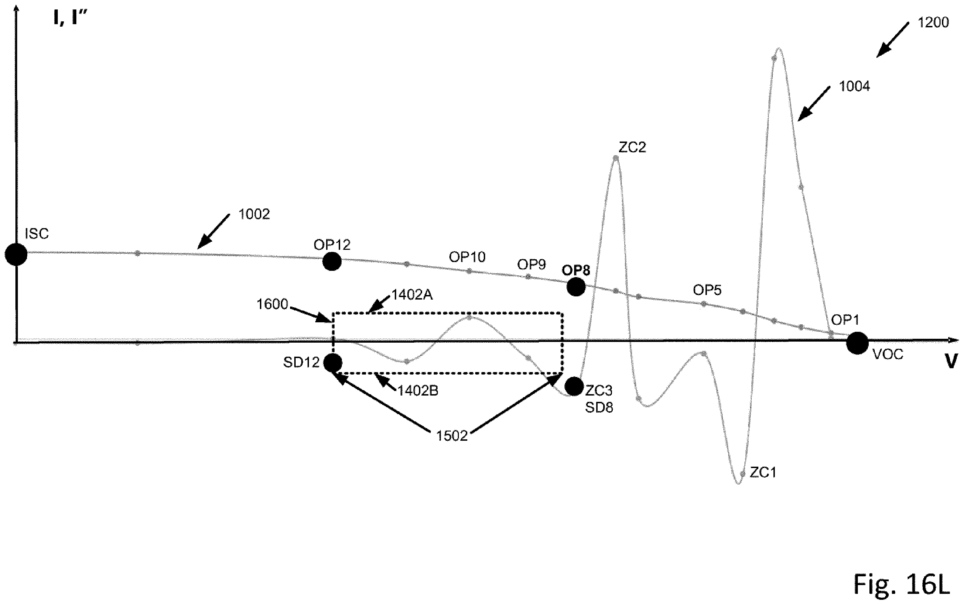

In Fig. 16L, it is shown that operating point OP12 may be used by control circuitry 516 to select the zero crossing ZC to set the operating point OP for the PV module 502 using the hot spot mitigation algorithm. The second-order derivative value SD12 may be within the current axis thresholds 1402A, 1402B of the current axis filter 1400 of filter window 1600, and may not be itself considered a zero crossing ZC, and a previous zero crossing ZC may have been previously identified (e.g., zero crossings ZC3, ZC2, ZC1), and the voltage axis threshold 1502 value of the voltage axis filter 1500 since that previous zero crossing ZC has been passed (e.g., the previous zero crossing ZC3 is beyond the range of the voltage axis threshold 1502 value of filter window 1600, as well as the first zero crossing ZC1 and the second zero crossing ZC2). Therefore, the operating point OP12 may be used by control circuitry 516 to select the zero crossing ZC to set the operating point OP for the PV module 502. The control circuitry 516 may select the operating point OP related to the previous zero crossing ZC (e.g., operating point OP8 related to zero crossing ZC3). Thus, the operating point OP for the PV module 502 may be set using the hot spot mitigation algorithm as operating point OP8 which is the operating point OP related to the previous zero crossing ZC3. Selecting operating point OP8 as the operating point of the PV module 502 may help ensure that all of the solar cells 600 of the PV module 502 (e.g., shaded solar cells 600 and unshaded solar cells 600) are producing a positive voltage and not a negative voltage, and may help prevent hot spots in the PV module 502. Selecting operating point OP8 as the operating point of the PV module 502 may also help ensure that the zero crossing ZC that is selected is relatively close to the inflection point IP of the I-V curve 1002 of the PV module.

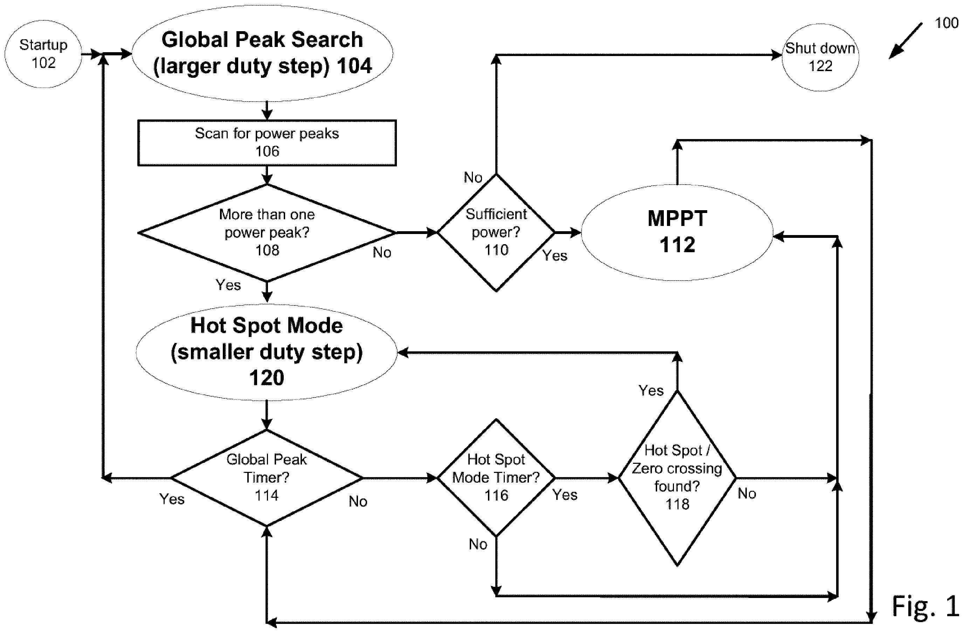

Reference is now made to Fig. 1, which shows an example method for controlling states of the control circuitry 516 which may be used for determining when control circuitry 516 should switch from a power point mode of operation in which the operating point OP is determined using a maximum power point algorithm to a hot spot mitigation mode of operation in which the operating point OP is determined using a hot spot mitigation algorithm to produce a reduced power output and prevent over-heating of the PV module 502.

In step 102, control circuitry 516 may perform startup operations to begin operating (e.g., at the beginning of the day, when the sun begins to substantially affect the PV modules, and sufficient power is produced by the PV module 502).

In step 104, control circuitry 516 may perform a global peak search to search for a maximum power peak in a power curve (e.g., a P-V curve or a P-I curve) related to the PV module 502. The peak search may be done with a relatively low frequency of sampling (e.g., a relatively low resolution sweep with relatively large steps between the measurements, for example, using a relatively larger duty step between measurements).

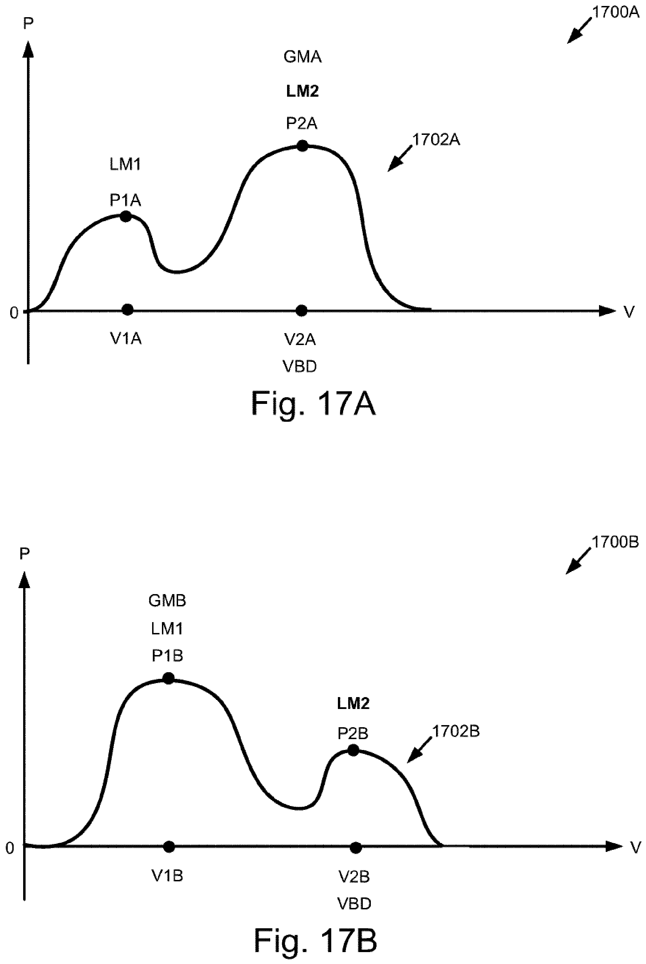

In step 106, control circuitry 516 may scan the power curve (e.g., a P-V curve or a P-I curve) for power peaks related to the PV module 502. For example, as shown in Fig. 17A and Fig. 17B, the power curve (e.g., P-V curve) may have a plurality of power peaks in addition to the maximum power peak. The greatest power peak may be considered a global maximum power peak, while other power peaks may be considered local maximum power peaks. In some examples, where power modules 506 do not have bypass diodes BD, the power curve (e.g., P-V curve) might not have a plurality of power peaks.

In step 108, control circuitry 516 may determine whether there are a plurality of power peaks in the power curve (e.g., the P-V curve) related to the PV module 502. Multiple power peaks in the power curve (e.g., P-V curve) may be caused by bypass diodes BD operating in a forward bias to bypass one or more solar cell strings 602 of the PV module (e.g., due to shading of one or more solar cells 600 of the solar cell strings 602). If control circuitry 516 determines that there are not a plurality of power peaks in the power curve, control circuitry 516 may proceed to step 110. If control circuitry 516 determines that there are a plurality of power peaks in the power curve, control circuitry 516 may proceed to step 120.

In step 110, control circuitry 516 may determine whether there is sufficient power produced by the PV module 502. If control circuitry 516 determines that there is not sufficient power, control circuitry 516 may proceed to step 122. If control circuitry 516 determines that there is sufficient power, control circuitry 516 may proceed to step 112.

In step 122, control circuitry 516 may perform shut down operations to end operating (e.g., at the end of the day, or when there is relatively great amount of shading, when the sun no longer substantially affects the PV modules, and sufficient power is not produced by the PV module 502).

In step 112, control circuitry 516 may operate in a maximum power point tracking (MPPT) mode of operation in which the operating point OP is determined using a maximum power point algorithm. Some examples of MPPT algorithms that may be used in the MPPT mode of operation include: Perturb and Observe (P&O), Incremental Conductance (Inc. Con.), Differential Method, Curve Fitting, Open Circuit Voltage PV Generator Method, Short Circuit PV Generator Method, etc. Control circuitry 516 may proceed from step 112 to step 114.

In step 114, control circuitry 516 may determine whether a global peak timer has been reached or exceeded. If control circuitry 516 determines that the global peak timer has been reached or exceeded, then control circuitry 516 may proceed to step 104 to perform a global peak search as described above. If control circuitry 516 determines that the global peak timer has not been reached or exceeded sufficient power, control circuitry 516 may proceed to step 116.

In step 116, control circuitry 516 may determine whether a hot spot timer has been reached or exceeded. If control circuitry 516 determines that the hot spot timer has not been reached or exceeded, then control circuitry 516 may proceed to step 112 to operate in an MPPT mode of operation as described above. If control circuitry 516 determines that the hot spot timer has been reached or exceeded, control circuitry 516 may proceed to step 118.

In step 118, control circuitry 516 may determine whether a hot spot or zero crossing in the second-order derivative of the I-V curve has been found. If control circuitry 516 determines that a hot spot or zero crossing in the second-order derivative of the I-V curve has been found, then control circuitry 516 may proceed to step 120 to operate in a hot spot mode of operation. If control circuitry 516 determines that a hot spot or zero crossing in the second-order derivative of the I-V curve has been found, control circuitry 516 may proceed to step 112 to operate in an MPPT mode of operation as described above.

In step 120, control circuitry 516 may operate in a hot spot mitigation mode of operation in which the operating point OP is determined using a hot spot mitigation algorithm to produce a reduced power output and prevent over-heating of the PV module 502. In step 120, control circuitry 516 may perform a search for zero crossings ZC in the second-order derivative of the I-V curve related to the PV module 502. The search for zero crossings may be done with a relatively high frequency of sampling (a relatively high resolution sweep with relatively small steps between the measurements, for example, using a relatively smaller duty step between measurements). Control circuitry 516 may proceed from step 120 to step 114.

For example, a hot spot timer threshold value may be greater than a global peak timer threshold value. In other words, control circuitry 516 may switch from the MPPT mode of operation to the Global Peak Search mode of operation more frequently than to the Hot Spot Mode of operation based on just the timer (assuming multiple power peaks are not identified in step 108 and hot spots or zero crossings in the second-order derivative of the I-V curve have not been found in step 118). In some examples, if control circuitry 516 determines that the hot spot timer has been reached or exceeded, then the control circuitry 516 may proceed directly from step 116 to step 120.

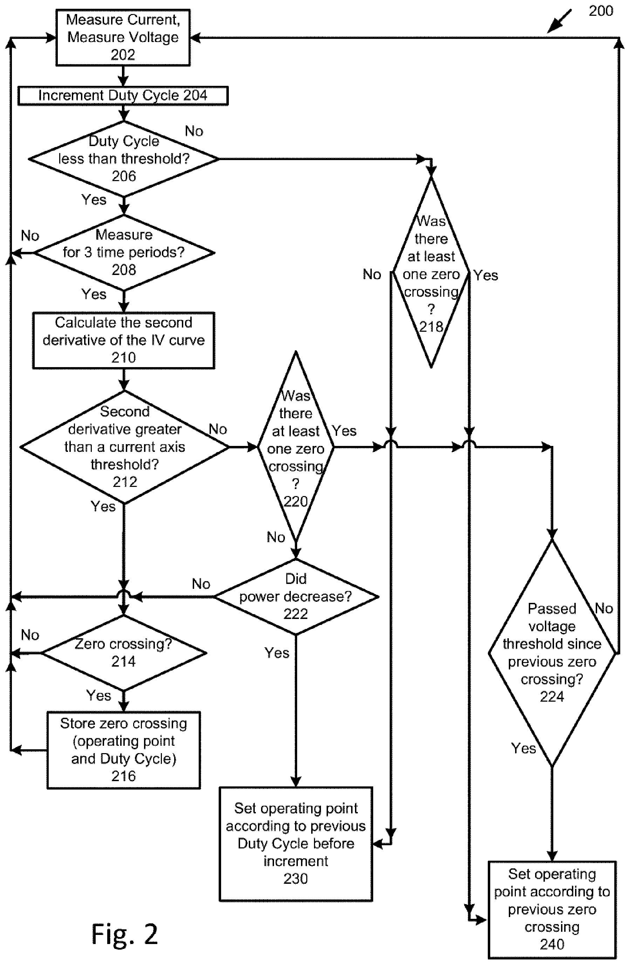

Reference is now made to Fig. 2, which shows a method for setting an operating point OP of a PV module 502 using a hot spot mitigation algorithm used by control circuitry 516 in a hot spot mitigation mode of operation in which the operating point OP is determined using a hot spot mitigation algorithm to produce a reduced power output and prevent over-heating of the PV module 502. The method of Fig. 2 may be part of step 120 of Fig. 1.

In step 202, an operating point OP for a given duty cycle for a first time (t) may be obtained by control circuitry 516. For example, one or more sensors may be used to determine electrical parameter values related to the output of PV module 502 and data may be provided from the one or more sensors to control circuitry 516. The operating point OP for time (t) may include an output current Iout for time (t) and an output voltage Vout for time (t). The obtained operating point may also be referred to herein as a data point. Control circuitry 516 may be configured to receive a plurality of data points related to the PV module 502 for a plurality of times.

In step 204, the control circuitry 516 may increment the duty cycle parameter to be used in a future performance of step 202. Incrementing the duty cycle parameter may be done for stepping up the current and stepping down the voltage and moving the operating point OP up the I-V curve from right to left in the direction of arrow 1602 shown in Fig. 16A for the measurements obtained the next time that step 202 is performed.

In step 206, the control circuitry 516 may determine whether the incremented duty cycle parameter is less than a duty cycle threshold. If the control circuitry 516 determines that the incremented duty cycle parameter is less than a duty cycle threshold, then the control circuitry 516 may proceed to step 208. If the control circuitry 516 determines that the incremented duty cycle parameter is greater than a duty cycle threshold, then the control circuitry 516 may proceed to step 218.

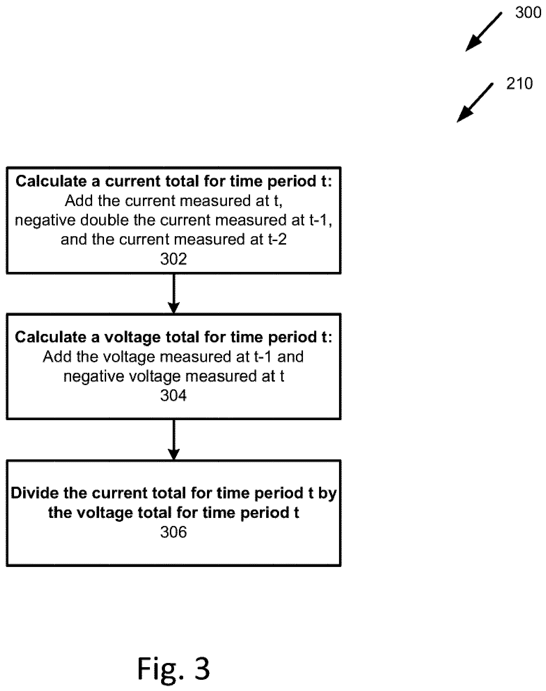

In step 208, the control circuitry 516 may determine whether there have been at least 3 iterations of step 202 resulting in at least 3 measurements of current and voltage measurements of 3 different operating points OP. At least 3 measurements may be used in order to calculate a second-order derivative value SD of the operating point OP, an example of which is given below with reference to Fig. 3. If the control circuitry 516 determines that there have been at least 3 iterations of step 202 resulting in at least 3 measurements of operating points OP (sets of current values and voltage values, e.g., Vout, Iout on the I-V curve of the PV module 502), then the control circuitry 516 may proceed to step 210. If the control circuitry 516 determines that there have not yet been at least 3 iterations of step 202 resulting in at least 3 measurements of operating points OP (current and voltage sets), then the control circuitry 516 may return to step 202 and obtain additional measurements for one or more additional times (t+1, t+2, etc.), e.g., control circuitry 516 may receive additional data points related to a PV module 502.

In step 210, the control circuitry 516 may calculate the second-order derivative value SD of the operating point OP on the I-V curve 1002 of the PV module 502 for the given time (t). Control circuitry 516 may calculate the second-order derivative value SD using any appropriate method. For example, the control circuitry 516 may use one or more previously obtained measurements of operating points OP (current and voltage sets). For example, control circuitry 516 may use the measurements from the given time period (t) and at least two other previous times (t-1, t-2) (e.g., measurements from at least three times total). As mentioned above, an example of calculating the second-order derivative given below with reference to Fig. 3. Control circuitry 516 may be configured to calculate a plurality of derivatives based on a plurality of operating points for a plurality of times.

In step 212, the control circuitry 516 may determine whether the second-order derivative value SD is greater than a current axis threshold 1402A, 1420B value of a current axis filter 1400, which may be part of a filter window 1600. If the control circuitry 516 determines that the second-order derivative value SD is greater than a current axis threshold 1402A, 1402B value of the current axis filter 1400, then the control circuitry 516 may proceed to step 214. If the control circuitry 516 determines that the second-order derivative value SD is not greater than a current axis threshold 1402A, 1402B value of the current axis filter 1400, then the control circuitry 516 may proceed to step 220.

In step 214, the control circuitry 516 may determine whether there was a zero crossing ZC in the second-order derivative I"-V curve 1004. For example, the control circuitry 516 may determine whether the second-order derivative value SD changed sign (e.g., went from positive to negative, or from negative to positive) compared to a previous second-order derivative value SD (e.g., compared to the second-order derivative value SD from the previous time (t-1)). If the control circuitry 516 determines that there was a zero crossing between the second-order derivative value SD from the previous time and the second-order derivative value from the present time, the control circuitry 516 may proceed to step 216 (e.g., the second-order derivative values SD from those two time periods have different signs, one is positive and one is negative). If the control circuitry 516 determines that there was no zero crossing between the second-order derivative value SD from the previous time and the second-order derivative value SD from the present time, the control circuitry 516 may return to step 202 (e.g., when the second-order derivative values SD from those two times have the same signs, both are positive or both are negative) and obtain additional measurements for one or more additional times (t+1, t+2, etc.). Control circuitry 516 may be configured to determine a zero crossing based on a plurality of derivatives for a plurality of times.

In step 216, the control circuitry 516 may store data related to the zero crossing ZC. For example, control circuitry 516 may control a processor to store data in data storage of a computer memory. For example, control circuitry 516 may control the processor to store data related to the operating point OP. For example, the data may include: data indicating that there was a zero crossing ZC for a given operating point OP, a duty cycle value related to that operating point OP, a current value related to that operating point OP, a voltage value related to that operating point OP, a time or time stamp related to that operating point OP, a second-order derivative value related to that operating point OP, etc. The control circuitry 516 may then return to step 202 and obtain additional measurements for one or more additional times (t+1, t+2, etc.).

As mentioned above, if, at step 206, the control circuitry 516 determines that the incremented duty cycle parameter is greater than a duty cycle threshold, then the control circuitry 516 may proceed to step 218.

In step 218, the control circuitry 516 may determine whether there was at least one zero crossing ZC. For example, control circuitry 516 may control a processor to access data previously stored in data storage of a computer memory during a previous time (e.g., t-1, t-2, t-3, etc.) of the hot spot algorithm. If the control circuitry 516 determines that there was not at least one previous zero crossing ZC, then the control circuitry 516 may proceed to step 230. If the control circuitry 516 determines that there was at least one previous zero crossing ZC at a previous time, then the control circuitry 516 may proceed to step 240.

In step 230, the control circuitry 516 may set the operating point OP of the PV module 520 according to data related to the prior operating point OP for the previous time. For example, control circuitry 516 may control a processor to access data previously stored in data storage of a computer memory during a previous time. For example, control circuitry 516 may control a processor to access data related to a duty cycle parameter value before increment in step 204. For example, control circuitry 516 may control one or more switches of the power converter circuitry 700 of the power device 504 to set the output power of the PV module 502 by controlling the duty cycle of the power device 504.

In step 240, the control circuitry 516 may set the operating point OP of the PV module 502 according to data related to the previous zero crossing ZC. For example, control circuitry 516 may control a processor to access data previously stored in data storage of a computer memory during a previous time. For example, control circuitry 516 may control one or more switches of the power converter circuitry 700 of the power device 504 to set the operating point (output voltage and output current) of the PV module 502 by controlling the duty cycle of the power device 504. Power device 504 may have a substantially fixed output voltage so that control circuitry 516 may control the output voltage of the PV module 502 that is input to the power device 504 by controlling the duty cycle of the power device 504.

As mentioned above, if at step 212 the control circuitry 516 determines that the second-order derivative value SD is not greater than a current axis threshold 1402A, 1402B value of a current axis filter 1400, then the control circuitry 516 may proceed to step 220.

In step 220, the control circuitry 516 may determine whether there was at least one previous zero crossing ZC. For example, control circuitry 516 may control a processor to access data previously stored in data storage of a computer memory during a previous time. If the control circuitry 516 determines that there was not at least one previous zero crossing ZC, then the control circuitry 516 may proceed to step 222. If the control circuitry 516 determines that there was at least one previous zero crossing at a previous time, then the control circuitry 516 may proceed to step 224.

In step 222, the control circuitry 516 may determine whether there was a decrease in power for the duty cycle of the operating point OP at the given time. For example, control circuitry 516 may control a processor to access data previously stored in data storage of a computer memory during a previous time to compare output power of the PV module 502 at a previous time to see if the output power at the present time is less than the power at the previous time. If the output power at the present time is greater than the output power at the previous time, then the maximum power point MPC of the PV panel 502 has not been passed yet. If the output power at the present time is less than the output power at the previous time that may be an indication that the maximum power point MPC of the PV panel 502 has been passed. For example, as shown in Fig. 10 and Fig. 11, starting from the operating point where Vout = VOC, Iout = 0 and moving towards the operating point where Vout = 0, Iout = ISC the output power increases until it reaches the maximum power at the MPC point on a power curve (e.g., the P-V curve 1102). If the output power decreases that may be an indication that the inflection point IP on the I-V curve 1002 was passed without being detected, or that there is no inflection point IP on the I-V curve 1002. If the control circuitry 516 determines that there was not a decrease of power from the power in the prior time to the power in the present time, then the control circuitry 516 may return to step 202 and obtain additional measurements for one or more additional times (t+1, t+2, etc.). If the control circuitry 516 determines that there was a decrease of power from the power in the prior time to the power in the present time, then the control circuitry 516 may proceed to step 230 and set the operating point OP of the PV module 502 according to data related to the prior operating point OP (e.g., using the duty cycle of the previous time, before increment in step 204).

As mentioned above, if at step 220 the control circuitry 516 determines that there was at least one previous zero crossing ZC at a previous time, then the control circuitry 516 may proceed to step 224.

In step 224, the control circuitry 516 may determine whether a voltage axis threshold 1502 value of a voltage axis filter 1500 that may be part of a filter window 1600 has been passed (e.g., between the voltage of the present operating point OP and the voltage of the operating point OP associated with the previously determined zero crossing ZC). If the control circuitry 516 determines that the voltage difference value is greater than a voltage axis threshold 1502 value of a voltage axis filter 1500, then the control circuitry 516 may proceed to step 240 and set the operating point OP of the PV module 502 according to data related to the previous zero crossing ZC. If the control circuitry 516 determines that the voltage different value is not greater than the voltage axis threshold 1502 value of the voltage axis filter 1500, then the control circuitry 516 may return to step 202 and obtain additional measurements for one or more additional times (t+1, t+2, etc.).

The operating point OP of the PV module 502 may be set according to zero crossings ZC in the second-order derivative relatively close to the inflection point IP to help ensure that all of the solar cells 600 of the PV module 502 are producing positive voltage and to prevent hot spots in the PV module 502. The hot spot mode of operation may eliminate the need for bypass diodes BD since the hot spot algorithm may prevent hot spots in the PV module 502 and no solar cell 600 may be producing a negative voltage. Control circuitry 516 may be configured to set an operating point OP of the PV module 502 based on one or more determined zero crossings ZC.

Reference is now made to Fig. 3, which shows a method for calculating the second-order derivative value SD using a hot spot mitigation algorithm used by control circuitry 516 in a hot spot mitigation mode of operation in which the operating point OP is determined using a hot spot mitigation algorithm to produce a reduced power output and prevent over-heating of the PV module 502. The method of Fig. 3 may be part of step 210 in Fig. 2

In step 302, a second-order derivative current total value for a given time (t) may be calculated. As mentioned above, the method 300 of calculating the second-order derivative may be done after at least 3 measurements for 3 different times have been obtained. For example, the second-order derivative current total value for time (t) may be calculated, using Formula 1, by adding the current obtained at a first previous time (t-2) that is prior to a second prior time (t-1) (e.g., time [t-2] being two time periods back from time [t] and time [t-1] being one time period back from time [t]), negative double the current obtained at the second previous time (t-1) that is prior to the given time (t), and the current at the given time period (t).

$$\text{Formula 1: } \mathbf{Isd = I(t\text{-}2) - 2I(t\text{-}1) + I(t)}$$

In step 304, a second-order derivative voltage total value for a given time (t) may be calculated. As mentioned above, the method 300 of calculating the second-order derivative may be done after at least 3 measurements for 3 different times have been obtained. For example, the second-order derivative voltage total value for time (t) may be calculated, using Formula 2, by adding the voltage obtained at the second previous time (t-1), and negative the voltage at the give time period (t).

$$\text{Formula 2: } \mathbf{Vsd = V(t\text{-}1) - V(t)}$$

In step 306, the second-order derivative value SD for a given time (t) may be calculated. For example, the second-order derivative value SD for time (t) may be calculated, using Formula 3, by dividing the second-order derivative current total value Isd (e.g., determined from step 302) by the second derivative voltage total value Vsd (e.g., determined from step 304).

$$\text{Formula 3: } \mathbf{SD = I'' = Isd/Vsd.}$$

Formula 4 is derived by combining Formula 3 with Formulas 1 and 2.

Formula 4:

$$I'' = \frac{I_{i-2} - 2I_{i-1} + I_i}{(V_{i-1} - V_i)}$$

The method 200 may continue after step 306 of method 300 to step 212 in Fig. 2.

An example of setting an operating point OP using a hot spot mitigation algorithm used by a control circuitry 516 in a hot spot mitigation mode of operation in which the operating point OP is determined using a hot spot mitigation algorithm to produce a reduced power output and prevent over-heating of the PV module 502 will be given with reference to Fig. 16A- Fig. 16L, Fig. 2 and Fig. 3.

For a first time (11), values may be obtained in step 202 for a first operating point OP1 of the PV module 502 as shown in Fig. 16A. The incremented duty cycle is less than the duty cycle threshold, so the control circuitry 516 may proceed from step 206 to step 208, but since the time total is less than 3, the control circuitry 516 may return from step 208 to step 202 to obtain additional measurements for an additional time.

For a second time (t2), values may be obtained in step 202 for a second operating point OP2 of the PV module 502 as shown in Fig. 16B. The incremented duty cycle is less than the duty cycle threshold, so the control circuitry 516 may proceed from step 206 to step 208, but since the time total is less than 3 the control circuitry 516 may return from step 208 to step 202 to obtain additional measurements for an additional time.

For a third time (t3), values may be obtained in step 202 for a third operating point OP3 of the PV module 502 as shown in Fig. 16C. The incremented duty cycle is less than the duty cycle threshold, so the control circuitry 516 may proceed from step 206 to step 208. The time total is equal to 3, so the control circuitry 516 proceeds from step 208 to step 210 to calculate the second-order derivative value (e.g., as shown in Fig. 3, described above) using

$$\text{Formula 4: } \mathbf{SD3 = SD(t3) = [I(t1) - 2I(t2) + I(t3)]/[V(t2)\text{-}V(t3)].}$$

The second-order derivative value SD3 is greater than the positive current axis threshold 1402A of current axis filter 1400 of filter window 1600, so the control circuitry 516 may proceed from step 212 to step 214, but, since there was no previous second-order derivative value SD, the second-order derivative value SD did not change signs from a prior second-order derivative value SD, so no zero crossing ZC is determined and the control circuitry 516 may return from step 214 to step 202 to obtain additional measurements for an additional time.

For a fourth time (t4), values may be obtained in step 202 for a fourth operating point OP4 of the PV module 502 as shown in Fig. 16D. The incremented duty cycle is less than the duty cycle threshold, so the control circuitry 516 may proceed from step 206 to step 208. The time total is greater than 3 so the control circuitry 516 proceeds from step 208 to step 210 to calculate the second-order derivative value SD (for example as shown in Fig. 3, described above) using

Formula 4: $SD4 = SD(t4) = [I(t2) - 2I(t3) + I(t4)]/[V(t3)-V(t4)]$.

The second-order derivative value SD4 is greater than the negative current axis threshold 1402B of current axis filter 1400 of filter window 1600, so the control circuitry 516 may proceed from step 212 to step 214. Since the second-order derivative value SD4 changed signs from the previous second-order derivative value SD3 (went from positive to negative) there is a zero crossing ZC1 determined for the fourth time (t4) related to fourth operating point OP4, and the control circuitry 516 may proceed from step 214 to step 216 to store the data associated with the zero crossing ZC1 related to the fourth operating point OP4 (e.g., a zero crossing indication, operating point values, the voltage value, the current value, the time stamp, the duty cycle value, etc.) and return to step 202 to obtain additional measurements for an additional time.

For a fifth time (t5), values may be obtained in step 202 for a fifth operating point OP5 of the PV module 502 as shown in Fig. 16E. The incremented duty cycle is less than the duty cycle threshold, so the control circuitry 516 may proceed from step 206 to step 208. The time total is greater than 3 so the control circuitry 516 proceeds from step 208 to step 210 to calculate the second-order derivative value SD (for example as shown in Fig. 3, described above) using

Formula 4: $SD5 = SD(t5) = [I(t3) - 2I(t4) + I(t5)]/[V(t4)-V(t5)]$.

The second-order derivative value SD5 is less than the negative current axis threshold 1402B of current axis filter 1400 of filter window 1600, so the control circuitry 516 may proceed from step 212 to step 220. Since there was at least one previous zero crossing ZC (e.g., the zero crossing ZC1 for the previous time [t4] related to operating point OP4) the control circuitry 516 may proceed from step 220 to step 224. Since the previous zero crossing ZC1 is within the voltage axis threshold 1502 value of voltage axis filter 1500 of filter window 1600 (the voltage difference value, i.e., the difference between the voltage of operating point OP4 associated with zero crossing ZC1 and the voltage of operating point OP5, is not greater than the voltage axis threshold 1502 value), the control circuitry 516 may return from step 224 to step 202 to obtain additional measurements for an additional time.

For a sixth time (t6), values may be obtained in step 202 for a sixth operating point OP6 of the PV module 502 as shown in Fig. 16F. The incremented duty cycle is less than the duty cycle threshold, so the control circuitry 516 may proceed from step 206 to step 208. The time total is greater than 3, so the control circuitry 516 may proceed from step 208 to step 210 to calculate the second-order derivative value (for example as shown in Fig. 3, described above) using

Formula 4: $SD6 = SD(t6) = [I(t4) - 2I(t5) + I(t6)]/[V(t5)-V(t6)]$.

The second-order derivative value SD6 is greater than the negative current axis threshold 1402B of current axis filter 1400 of filter window 1600, so the control circuitry 516 may proceed from step 212 to step 214, but since the second-order derivative value SD6 did not change signs from the prior second-order derivative value SD5 (e.g., second-order derivative SD6 has the same sign as second-order derivative SD5), no zero crossing ZC is determined and the control circuitry 516 returns from step 214 to step 202 to obtain additional measurements for an additional time.

For a seventh time (t7), values may be obtained in step 202 for a seventh operating point OP7 of the PV module 502 as shown in Fig. 16G. The incremented duty cycle is less than the duty cycle threshold, so the control circuitry 516 may proceed from step 206 to step 208. The time total is greater than 3, so the control circuitry 516 may proceed from step 208 to step 210 to calculate the second-order derivative value (for example as shown in Fig. 3, described above) using

Formula 4: $SD7 = SD(t7) = [I(t5) - 2I(t6) + I(t7)]/[V(t6)-V(t7)]$.

The second-order derivative value SD7 is greater than the positive current axis threshold 1402A of current axis filter 1400 of filter window 1600, so the control circuitry 516 may proceed from step 212 to step 214. Since the second-order derivative value SD7 changed signs from the previous second-order derivative value SD6 (went from negative to positive) there is a zero crossing ZC2 determined for the seventh time (t7) related to seventh operating point OP7, and the control circuitry 516 proceeds from step 214 to step 216 to store the data associated with the zero crossing ZC2 related to the seventh operating point OP7 (e.g., a zero crossing indication, operating point values, the voltage value, the current value, the time stamp, the duty cycle value, etc.) and returns to step 202 to obtain additional measurements for an additional time.

For an eighth time (t8), values may be obtained in step 202 for an eighth operating point OP8 of the PV module 502 as shown in Fig. 16H. The incremented duty cycle is less than the duty cycle threshold, so the control circuitry 516 may proceed from step 206 to step 208. The time period total is greater than 3, so the control circuitry 516 may proceed from step 208 to step 210 to calculate the second-order derivative value SD (for example as shown in Fig. 3, described above) using Formula 4: **SD8 = SD(t8) = [I(t6) - 2I(t7) + I(t8)]/[V(t7)-V(t8)].** The second-order derivative value SD8 is greater than the negative current axis threshold 1402B of current axis filter 1400 of filter window 1600, so the control circuitry 516 may proceed from step 212 to step 214. Since the second-order derivative value SD8 changed signs from the previous second-order derivative value SD7 (went from positive to negative) there is a zero crossing ZC3 determined for the eighth time (t8) related to eighth operating point OP8, and the control circuitry 516 proceeds from step 214 to step 216 to store the data associated with the zero crossing ZC3 related to the eighth operating point OP8 (e.g., a zero crossing indication, operating point values, the voltage value, the current value, the time stamp, the duty cycle value, etc.) and returns to step 202 to obtain additional measurements for an additional time.

For a ninth time (t9), values may be obtained in step 202 for a ninth operating point OP9 of the PV module 502 as shown in Fig. 16I. The incremented duty cycle is less than the duty cycle threshold, so the control circuitry 516 may proceed from step 206 to step 208. The time total is greater than 3, so the control circuitry 516 may proceed from step 208 to step 210 to calculate the second-order derivative value SD (for example as shown in Fig. 3, described above) using

$$\text{Formula 4: } \mathbf{SD9} = \mathbf{SD(t9)} = \mathbf{[I(t7) - 2I(t8) + I(t9)]/[V(t8)\text{-}V(t9)]}.$$

The second-order derivative value SD9 is less than the negative current axis threshold 1402B of current axis filter 1400 of filter window 1600, so the control circuitry 516 may proceed from step 212 to step 220. Since there was at least one previous zero crossing ZC (e.g., for operating points OP8, OP7, and OP4) the control circuitry 516 proceeds from step 220 to step 224. Since the previous zero crossing ZC3 is within the voltage axis threshold 1502 value of voltage axis filter 1500 of filter window 1600 (e.g., the voltage difference value, i.e., the difference between the voltage of operating point OP8 associated with zero crossing ZC3 and the voltage of operating point OP9, is not greater than the voltage axis threshold 1502 value), the control circuitry 516 returns from step 224 to step 202 to obtain additional measurements for an additional time.

The tenth time (t10) is similar to the fourth time (t4) and the ninth time (t9). For the tenth time (t10), values may be obtained in step 202 for the tenth operating point OP10 of the PV module 502 as shown in Fig. 16 J. The incremented duty cycle is less than the duty cycle threshold, so the control circuitry 516 may proceed from step 206 to step 208. The time total is greater than 3, so the control circuitry 516 may proceed from step 208 to step 210 to calculate the second-order derivative value SD (for example as shown in Fig. 3, described above) using Formula 4: **SD10 = SD(t10) = [I(t8) - 2I(t9) + I(t10)]/[V(t9)-V(t10)].** The second-order derivative value SD10 is less than the positive current axis threshold 1402A of current axis filter 1400 of filter window 1600, so the control circuitry 516 may proceed from step 212 to step 220. Since there was at least one previous zero crossing ZC (e.g., for operating points OP8, OP7, and OP4) the control circuitry 516 proceeds from step 220 to step 224. Since the previous zero crossing ZC3 is within the voltage axis threshold 1502 value of voltage axis filter 1500 of filter window 1600 (e.g., the voltage difference value, i.e., the difference between the voltage of operating point OP8 associated with zero crossing ZC3 and the voltage of operating point OP10, is not greater than the voltage axis threshold 1502 value), the control circuitry 516 returns from step 224 to step 202 to obtain additional measurements for an additional time.

The eleventh time (t11) is similar to the tenth time (t10). For the eleventh time (111), values may be obtained in step 202 for the eleventh operating point OP11 of the PV module 502 as shown in Fig. 16K. The incremented duty cycle is less than the duty cycle threshold, so the control circuitry 516 may proceed from step 206 to step 208. The time total is greater than 3, so the control circuitry 516 may proceed from step 208 to step 210 to calculate the second-order derivative value SD (for example as shown in Fig. 3, described above) using

$$\text{Formula 4: } \mathbf{SD11} = \mathbf{SD(t11)} = \mathbf{[I(t9) - 2I(t10) + I(t11)]/[V(t10)\text{-}V(t11)]}.$$

The second-order derivative value SD11 is less than the negative current axis threshold 1402B of current axis filter 1400 of filter window 1600, so the control circuitry 516 may proceed from step 212 to step 220. Since there was at least one previous zero crossing ZC (e.g., for operating points OP8, OP7, and OP4) the control circuitry 516 proceeds from step 220 to step 224. Since the previous zero crossing ZC3 is within the voltage axis threshold 1502 value of voltage axis filter 1500 of filter window 1600 (e.g., the voltage difference value, i.e., the difference between the voltage of operating point OP8 associated with zero crossing ZC3 and the voltage of operating point OP11, is not greater than the voltage axis threshold 1502 value), the control circuitry 516 returns from step 224 to step 202 to obtain additional measurements for an additional time.

For the twelfth time (t12), values may be obtained in step 202 for the twelfth operating point OP12 of the PV module 502 as shown in Fig. 16L. The incremented duty cycle is less than the duty cycle threshold, so the control circuitry

EP 4 395 166 A1

516 may proceed from step 206 to step 208. The time total is greater than 3, so the control circuitry 516 may proceed from step 208 to step 210 to calculate the second-order derivative value SD (e.g., for example as shown in Fig. 3, described above) using Formula 4: **SD12 = SD(t12) = [I(t10) - 2I(t11) + I(t12)]/[V(t11)-V(t12)].** The second-order derivative value SD12 is less than negative current axis threshold 1402B of current axis filter 1400 of filter window 1600, so the control circuitry 516 may proceed from step 212 to step 220. Since there was at least one previous zero crossing ZC (e.g., for the operating points OP8, OP7, and OP4) the control circuitry 516 proceeds from step 220 to step 224. The previous zero crossing ZC3 is beyond the voltage axis threshold 1502 value of voltage axis filter 1500 of filter window 1600 (the voltage difference value, i.e., the difference between the voltage of operating point OP8 associated with zero crossing ZC3 and the voltage of operating point OP12, is greater than the voltage axis threshold 1502 value of voltage axis filter 1500), so the control circuitry 516 may proceed from step 224 to step 240 to set the operating point OP of the PV module 502 according to data related to the previous zero crossing ZC3. In step 240 the control circuitry 516 may set the operating point OP of the PV module 502 according to data related to the previous zero crossing ZC3. For example, the control circuitry 516 may access data stored in computer memory and set the operating point OP of the PV module 502 to the stored duty cycle associated with the previous zero crossing ZC3, i.e., the duty cycle of operating point OP8. This may help ensure that all of the solar cells 600 of the PV module 502 are producing positive voltage and to prevent any hot spots in the PV module 502. The operating point OP may be set according to zero crossings ZC in the second-order derivative relatively close to the inflection point IP. The hot spot mode of operation may eliminate the need for bypass diodes BD since the hot spot algorithm may prevent may prevent hot spots in the PV module 502 and no solar cell 600 is producing a negative voltage.

Reference is now made to Fig. 4, which shows an example method for determining when control circuitry 516 switches operation of an associated PV module 502 from a power point mode of operation in which the operating point OP is determined using a maximum power point algorithm to a hot spot mitigation mode of operation in which the operating point OP is determined using a hot spot mitigation algorithm to produce a reduced power output and prevent over-heating of the PV module 502.

In step 402, the control circuitry 516 may perform a peak sweep to search for maximum power peaks in a power curve (e.g., a P-V curve). The peak sweep may be done with a relatively low frequency of sampling, e.g., a low resolution sweep, with relatively large steps between the measurements. As mentioned above, multiple power peaks in a power curve (e.g., the P-V curve) may be caused by bypass diodes BD operating in a forward bias to bypass one or more solar cell strings 602 of the PV module (e.g., due to shading of one or more solar cells 600 of the solar cell strings 602).

In step 404, the control circuitry 516 may determine whether there is more than one peak determined in the peak sweep. If there is only one peak determined in the peak sweep, then the control circuitry 516 may return to step 302. If there is more than one peak determined in the peak sweep, then the control circuitry 516 may proceed to step 306.

In step 406, the control circuitry 516 may change from power point mode of operation to operate in the hot spot mitigation mode of operation in which the operating point OP is determined using a hot spot mitigation algorithm. Control circuitry 516 may be configured to determine the operating point OP of the PV module 502 using the hot spot mitigation algorithm by determining zero crossings in the second-order derivative of the I-V curve of the PV module 502 starting near the VOC voltage (Vout = about Vmax) and decreasing the voltage towards the ISC current where Vout = about 0 V. Alternatively, control circuitry 516 may be configured to determine the operating point OP of the PV module 502 using the hot spot mitigation algorithm by determining zero crossings in the second-order derivative of the I-V curve of the PV module 502 starting near a voltage boundary point Vout = VBD and increasing the voltage towards the VOC voltage (Vout = about Vmax). The voltage threshold may be based on the voltage of a peak in the peak sweep. For example, the voltage threshold may be based on the voltage of a peak with the highest voltage in the peak sweep. As mentioned above, multiple power peaks in a power curve (e.g., the P-V curve) may be caused by bypass diodes BD operating in a forward bias to bypass one or more solar cell strings 602 of the PV module (e.g., due to shading of one or more solar cells 600 of the solar cell strings 602). In some examples, where there are no bypass diodes BD in the PV module 502 or the power device 504, then there might not be multiple peaks in a power curve (e.g., the P-V curve).

Alternatively, a timer may be used to decide when control circuitry 516 operates in the hot spot mode of operation using the hot spot algorithm. For example, control circuitry 516 may be configured to normally operate in a maximum power point mode of operation using an MPPT algorithm, but may switch to the hot spot mode of operation if multiple power peaks are detected or a certain interval of time has elapsed (a timer threshold is met or exceeded). For example, the timer threshold may ensure that the control circuitry 516 performs the hot spot algorithm for a time interval (e.g., about every 10-30 minutes). In some examples, control circuitry 516 may be configured to run the hot spot algorithm on a single PV module 502 at a time. Control circuitry 516 may be configured to coordinate when each PV module 502 runs the hot spot algorithm. For example, control circuitry 516 may be configured to run the hot spot algorithm on a first PV module 502 in a series string 514 while the other PV modules 502 in that series string 514 operate in a maximum power point mode of operation. In some examples, control circuitry 516 may not operate in a maximum power point tracking mode of operation and may operate in a hot spot mitigation mode of operation. In some examples, the PV module and the power device 504 might not include bypass diodes BD that bypass one or more solar cells due to shading. The hot spot algorithm may be used by control circuitry 516 to set an operating point based on the zero crossings of the second-order derivative of I-V curve, which may alleviate the need for bypass diodes BD and/or the MPPT algorithm. In some examples, the PV power source (PV module 502 and/or power module 506) may be without bypass diodes BD.

As mentioned above, when performing a peak sweep of a power curve (e.g., P-V curve) of the PV module 502, the control circuitry 516 may determine that the power curve (e.g., P-V curve) has multiple peaks.

Reference is now made to Fig. 17A which shows a first graph of a P-V curve 1702A of a first PV module 502 and to Fig. 17B which shows a second graph of a P-V curve 1702B of a second PV module 502. In P-V curve 1702A and P-V curve 1702B, there are multiple power peaks that may be determined in a peak sweep. In some cases, the highest peak, also referred to as the global maximum, may be at a greater voltage than other peaks in the power curve (e.g., P-V curve). In some cases, the highest peak (global maximum) may be at a lower voltage than other peaks in the power curve (e.g., P-V curve). In the example of Fig. 17A, the highest peak P2A (global maximum GM1) may be at a greater voltage V2A than the other peak P1A at voltage V1A. In the example of Fig. 17B, the highest peak P1B (e.g., global maximum GMB) may be at a lesser voltage V1B than the other peak P2B at voltage V2B. Each peak P1A, P2A, P2B, P2B may also be referred to as a local maximum LM. If multiple peaks are found in the peak search, then the control circuitry 516 may be configured to operate in the hot spot mode of operation and run the hot spot algorithm to set the operating point OP of the PV module 502. In some examples, the control circuitry 516 may be configured to run the hot spot algorithm down the combined I-V curve 1002 of the PV module 502 instead of up the I-V curve as described above. For example, the control circuitry 516 may be configured to run the hot spot algorithm starting at a voltage boundary point VBD and moving down the I-V curve towards the VOC voltage point. Thus, the control circuitry 516 may be configured to run the hot spot algorithm in a manner in which the duty cycle is decreased each time (e.g., the output current Iout is decreased and the output voltage Vout is increased for each operating point OP at the different times of the hot spot algorithm). In such examples, the voltage boundary point VBD used by the control circuitry 516 may be the peak with the greatest voltage, regardless if that peak is the global maximum or not. Thus, in the example of Fig. 17A the voltage boundary point VBD would be voltage V2A which is the voltage of the global maximum GM1, but in the example of Fig. 17B the voltage boundary point VBD would be voltage V2B which is the voltage of peak P2B which is the local maximum LM2 and not a global maximum. In some cases, the voltage boundary point VBD may also be used when the control circuitry 516 is configured to run the hot spot algorithm moving up the I-V curve towards the V = 0 voltage point as a voltage boundary point VBD to stop the hot spot algorithm and set an operating point with a voltage lower than the voltage boundary point VBD. In some examples, the control circuitry 516 may be configured to use the first-order derivative of the I-V curve to determine the voltage boundary point VBD.

Reference is now made to Fig. 18, which shows a zoomed in section 1200 of the graph of the combined I-V curve 1002 of the PV module 502 that includes one or more shaded solar cells 600 and one or more unshaded solar cells 600. Fig. 18 also includes a graph of the second-order derivative I"-V curve 1004 related to the combined I-V curve 1002 and a current axis filter 1400 that may be used to determine which zero crossings ZC should be considered when determining an operating point OP for the PV module 502 to maintain all of the solar cells 600 producing a positive voltage so there are no hot spots in the PV module 502. In the example of Fig. 18, control circuitry 516 may be configured to perform the hot spot algorithm to determine a first zero crossing ZC'1 in the second-order derivative I"-V curve 1004 by going left to right on the I-V curve 1002 (e.g., by going down the I-V curve 1002 by decreasing a duty cycle for each operating point OP that is checked at each time of the hot spot algorithm) in the direction of arrow 1802 shown in Fig. 18 for the measurements obtained for each progressive time. For example, if multiple peaks were determined in a power curve (e.g., the P-V curve 1102) from a relatively low resolution peak sweep of a power curve (e.g., the P-V curve) of the PV module 502, then control circuitry 516 may set a voltage threshold boundary point VBD and move to the right from towards an operating point OP with a voltage of Vout = VOC, and a current of Iout = about 0. Thus, in this case control circuitry 516 may be configured to lower a duty cycle each time to step down the current and step up the voltage of PV module 502. In this example, when control circuitry 516 determines the first zero crossing ZC'1 in the second-order derivative values using the current axis filter 1400, control circuitry 516 may set the associated operating point as the operating point OP of the PV module 502 (e.g., the operating point OP'5 associated with that zero crossing ZC'1).

As shown Fig. 18, from the operating point OPBD associated with the voltage boundary VBD, the control circuitry 516 may decrease the duty cycle and go to first operating point OP'1, which may be same as operating point OP12 of Fig. 13, at a first time. The second-order derivate value SD'1 may be calculated by the control circuitry 516 for first operating point OP'1 (e.g., using the method of Fig. 3). Since the second-order derivate value SD'1 is within the band of current axis thresholds 1402A, 1402B of the current axis filter 1400, then no zero crossing is determined for the first operating point OP'1. Alternatively, the second-order derivate value SD'1 might not be calculated, e.g., if the time total is less than 3. The control circuitry 516 may decrease the duty cycle and go to second operating point OP'2, which may be same as operating point OP12 of Fig. 13, at a second time. The second-order derivate value SD'2 may be calculated by the control circuitry 516 for second operating point OP'2 (e.g., using the method of Fig. 3). Since the second-order derivate value SD'2 is within the band of current axis thresholds 1402A, 1402B of the current axis filter 1400, then no zero crossing may be determined for the second operating point OP'2. Alternatively, the second-order derivate value SD'1 might not be calculated, e.g., if the time total is less than 3. The control circuitry 516 may decrease the duty cycle and go to third operating point OP'3, which may be same as operating point OP10 of Fig. 13, at a third time. The second-order derivate value SD'3 may be calculated by the control circuitry 516 for third operating point OP'3 (e.g., using the method of Fig. 3). Since the second-order derivate value SD'3 is within the band of current axis thresholds 1402A, 1402B of the current axis filter 1400, then no zero crossing is determined for the third operating point OP'3. The control circuitry 516 may decrease the duty cycle and go to fourth operating point OP'4, which may be same as operating point OP9 of Fig. 13, at a fourth time. The second-order derivate value SD'4 may be calculated by the control circuitry 516 for fourth operating point OP'4 (e.g., using the method of Fig. 3). Since the second-order derivate value SD'4 is within the band of current axis thresholds 1402A, 1402B of the current axis filter 1400, then no zero crossing is determined for the fourth operating point OP'4. The control circuitry 516 may decrease the duty cycle and go to fifth operating point OP'5, which may be same as operating point OP8 of Fig. 13, at a fifth time. The second-order derivate value SD'5 may be calculated by the control circuitry 516 for fifth operating point OP'5 (e.g., using the method of Fig. 3). Since the second-order derivate value SD'5 is greater than the negative current axis threshold 1402B of the current axis filter 1400, then the first zero crossing ZC'1 is determined for the fifth operating point OP'5. Since zero crossing ZC'1 is determined for the fifth operating point OP'5, the control circuitry 516 sets the operating point OP of PV module 502 to operating point OP'5 (e.g., using the duty cycle of operating point OP'5) at a reduced power output to help ensure all of the solar cells 600 are producing a positive voltage and to prevent hot spots of the PV module 502 by limiting the current of the PV module 502.

In some examples, at each time, the control circuitry 516 may determine whether the decremented duty cycle is above a duty cycle threshold value. Similar to the example of Fig. 16A - Fig. 16L, the operating point OP that is chosen based on zero crossings in the second-order derivative curve may be an operating point OP8, OP'5 that is relatively close to the inflection point IP of the combined I-V curve 1002. In the examples of Fig. 16A - Fig. 16L and Fig. 18 the control circuitry 516 may set the same operating point OP8, OP'5 whether going from right to left in the direction of arrow 1602 or left to right in the direction of arrow 1602, but depending on the case it may use fewer times of the hot spot algorithm to get there. For example, in the examples of Fig. 16A - Fig. 16L, the control circuitry 516 may use 12 times to check 12 operating points OP1 - OP12 to set the operating point OP8 as the operating point of the PV module 502. In the example of Fig. 18, the control circuitry 516 may use 5 times to check 5 operating points OP'1 - OP'5 to set the operating point OP'5 as the operating point of the PV module 502. However, the example of Fig. 18 may be in the case that the PV power source includes bypass diodes BD, whereas the example of Fig. 16A - Fig. 16L may be in the case that the PV power source does not have any bypass diodes BD to prevent shading of the PV module 502.

In some examples, second-order derivative I"-V curve 1004 may be filtered first to get rid of noise and then the filtered second-order derivative values may be checked to determine if there was a zero crossing, which may allow control circuitry 516 to set an operating point OP that is relatively closer to the inflection point IP (the exact zero crossing point).

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the disclosure. Accordingly, the foregoing description is by way of example only, and is not limiting.

Here follows a list of clauses for highlighting various aspect of the disclosure.

Clause 1: A method comprising:

receiving a plurality of data points related to a photovoltaic (PV) power source;
calculating a plurality of derivatives based on the plurality of data points;
determining a zero crossing based on the plurality of derivatives; and
based on the zero crossing, setting an operating point of the PV power source.

Clause 2: The method of any preceding clause, e.g. clause 1, wherein the plurality of data points comprise a plurality of voltage values and a plurality of current values.

Clause 3: The method of any preceding clause, e.g. clause 1 or clause 2, wherein the plurality of derivatives comprise a plurality of first-order derivatives or a plurality of second-order derivatives.

Clause 4: The method of any one of the preceding clauses, wherein the plurality of derivatives are related to a current-voltage (I-V) curve of the PV power source.

Clause 5: The method of any preceding clause, e.g. clause 4, wherein the plurality of derivatives are derivatives of:

current as a dependent variable and voltage as an independent variable (dI/dV), or
voltage as a dependent variable and current as an independent variable (dV/dI).

Clause 6: The method of any one of the preceding clauses, wherein the determining the zero crossing is further based on a determination that there is a change in sign between a first one of the plurality derivatives and a second one of the plurality of derivatives.

Clause 7: The method of any preceding clause, e.g. clause 6, wherein the change in sign is from a positive value to a negative value or from a negative value to a positive value.

Clause 8: The method of any one of the preceding clauses, wherein the determining the zero crossing is further based on interpolation of the plurality of derivatives.

Clause 9: The method of any preceding clause, e.g. clause 8, wherein the interpolation is linear interpolation.

Clause 10: The method of any preceding clause, e.g. clause 8, wherein the interpolation is non-linear interpolation.

Clause 11: The method of any one of the preceding clauses, wherein determining the zero crossing is based on a determination that a derivative of the plurality of derivatives exceeds a threshold.

Clause 12: The method of any preceding clause, e.g. clause 11, wherein the derivative is a first absolute value and the threshold is a second absolute value.

Clause 13: The method of any one of the preceding clauses, wherein the zero crossing is selected from a plurality of zero crossings based on a sorting of:

the plurality of data points, or
the plurality of derivatives.

Clause 14: The method of any preceding clause, e.g. clause 13, wherein the sorting is further based on highest voltage, lowest voltage, highest current, or lowest current.

Clause 15: The method of any one of the preceding clauses, further comprising:

calculating a power related to the plurality of data points, and
based on a determination that there is a power decrease between the calculated power and a previously calculated power related to a previous plurality of data points, setting the operating point of the PV power source further based on the previous plurality of data points.

Clause 16: The method of any one of the preceding clauses, further comprising filtering the plurality of derivatives before determining the zero crossing.

Clause 17: A method comprising:

recording a plurality of data points related to an operation of a photovoltaic (PV) module;
calculating a power curve based on the plurality of data points;
determining a plurality of peaks in the calculated power curve; and
based on the plurality of peaks, operating the power converter in a first mode of operation that sets an operating point of the PV module to mitigate hot spots.

Clause 18: The method of any preceding clause, e.g. clause 17, wherein the operating the power converter comprises setting the operating point of the PV module based on hot spot mitigation according to a zero crossing in the calculated power curve.

Clause 19: The method of any preceding clause, e.g. clause 18, further comprising determining the zero crossing based on calculating a derivative.

Clause 20: The method of any one of any preceding clause, e.g. clause 17 to clause 19, wherein the recording is initiated based on a first timer.

Clause 21: The method of any preceding clause, e.g. clause 20, wherein the first mode of operation to mitigate hot spots is terminated based on a second timer.

Clause 22: The method of any preceding clause, e.g. clause 21, further comprising, after termination of the first mode of operation:

recording a second plurality of data points related to the operation of the PV module;
calculating a second power curve based on the second plurality of data points;
determining a single peak in the calculated second power curve; and
setting a second operating point of the PV module according to the determined single peak in the second power curve.

Clause 23: The method of any one of any preceding clause, e.g. clause 17 to clause 22, further comprising operating the power converter in a second mode of operation that sets an operating point of the PV module based on maximum power point tracking (MPPT).

Clause 24: The method of any one of any preceding clause, e.g. clause 17 to clause 23, further comprising, based on determining that there is insufficient power produced by the PV module, bypassing the PV module.

Clause 25: The method of any one of any preceding clause, e.g. clause 17 to clause 24, further comprising, based on determining that there is sufficient power produced by the PV module, supplying power to a load.

Clause 26: An apparatus comprising:

a diodeless photovoltaic (PV) power source;
a power converter configured to convert an input power from the diodeless PV power source to an output power;
control circuitry configured to set an operating point of the diodeless PV power source;
wherein the control circuitry is further configured to operate in:

a first mode of operation wherein the operating point is set based on a maximum power point tracking algorithm; or
a second mode of operation wherein the operating point is set based on a hotspot mitigation algorithm, and

wherein the diodeless PV power source comprises:

a plurality of solar cells connected in a series;
a positive output terminal connected to a first end of the series; and
a negative output terminal connected to a second end of the series.

Clause 27: The apparatus of any preceding clause, e.g. clause 26, wherein the diodeless PV power source does not comprise a bypass diode.

Clause 28: The apparatus of any preceding clause, e.g. clause 26 or clause 27, wherein the hotspot mitigation algorithm is configured to limit a temperature of at least one shaded solar cell of the plurality of solar cells.

Clause 29: The apparatus of any preceding clause, e.g. clause 28, wherein the hotspot mitigation algorithm is configured to reduce a power production of the diodeless PV power source to limit the temperature.

Clause 30: The apparatus of any one of any preceding clause, e.g. clause 26 to clause 29, wherein the control circuitry is further configured to prevent the diodeless PV power source from operating as a power sink.

Clause 31: The apparatus of any one of any preceding clause, e.g. clause 26 to clause 30, wherein the control circuitry is further configured to switch from the first mode of operation to the second mode of operation based on a timer value being greater than a timer value threshold.

Clause 32: The apparatus of any one of any preceding clause, e.g. clause 26 to clause 31, wherein the control circuitry is further configured to switch from the first mode of operation to the second mode of operation based on a detection of more than one power peak in a global peak search.

Clause 33: The apparatus of any one of any preceding clause, e.g. clause 26 to clause 32, wherein the control circuitry is further configured to set the operating point based on the hotspot mitigation algorithm using a zero crossing.

Clause 34: The apparatus of any preceding clause, e.g. clause 33, wherein the zero crossing is determined based on a calculated second-order derivative that is related to a current-voltage (I-V) curve of the diodeless PV power source.

Clause 35: The apparatus of any preceding clause, e.g. clause 34, wherein the calculated second-order derivative is related to an inflection point of the I-V curve of the diodeless PV power source.

Clause 36: The apparatus of any one of any preceding clause, e.g. clause 26 to clause 32, wherein the control circuitry is further configured to:

receive a plurality of data points related to the diodeless PV power source,
calculate a plurality of derivatives based on the plurality of data points,
determine a zero crossing based on the plurality of derivatives, and
based on the zero crossing, set an operating point of the diodeless PV power source.

Clause 37: An apparatus comprising:

a power converter configured to convert an input power to an output power;
control circuitry configured to set an operating point at an input of the power converter;
wherein the control circuitry is further configured to operate in:

a first mode of operation wherein the operating point is set based on a maximum power point tracking algorithm; or
a second mode of operation wherein the operating point is set based on a hotspot mitigation algorithm.

Clause 38: The apparatus of any preceding clause, e.g. clause 37, wherein the control circuitry is further configured to switch from the first mode of operation to the second mode of operation based on a timer value being greater than a timer value threshold.

Clause 39: The apparatus of any preceding clause, e.g. clause 37 or clause 38, wherein the control circuitry is further configured to switch from the first mode of operation to the second mode of operation based on a detection of more than one power peak in a global peak search.

Clause 40: The apparatus of any one of any preceding clause, e.g. clause 37 to clause 39, wherein the control circuitry is further configured to set the operating point based on the hotspot mitigation algorithm using a zero crossing.

Clause 41: The apparatus of any preceding clause, e.g. clause 40, wherein the zero crossing is determined based on a calculated second-order derivative that is related to a current-voltage (I-V) curve of a photovoltaic (PV) power source.

Clause 42: The apparatus of any preceding clause, e.g. clause 41, wherein the calculated second-order derivative is related to an inflection point of the I-V curve of the PV power source.

Clause 43: The apparatus of any one of any preceding clause, e.g. clause 37 to clause 39, wherein the control circuitry is further configured to:

receive a plurality of data points related to a photovoltaic (PV) power source,
calculate a plurality of derivatives based on the plurality of data points,
determine a zero crossing based on the plurality of derivatives, and
based on the zero crossing, set an operating point of the PV power source.

Clause 44: A method comprising:

obtaining a first plurality of data points related to a photovoltaic (PV) power source,
calculating a first second-order derivative value using the obtained first plurality of data points,
determining, based on the first second-order derivative value, a zero crossing, and
based on the zero crossing, setting an operating point of the PV power source.

Clause 45: The method of any preceding clause, e.g. clause 44, further comprising:

obtaining a second plurality of data points related to the PV power source,
calculating a second second-order derivative value using the obtained second plurality of data points,
determining, based on the second second-order derivative value, that there is not an additional zero crossing,
determining that a threshold between the first second-order derivative value and the second second-order derivative value is exceeded, and
setting the operating point of the PV power source based on the first plurality of data points.

Clause 46: The method of any preceding clause, e.g. clause 44, further comprising:

obtaining a second plurality of data points related to the PV power source,
calculating a second second-order derivative value using the obtained second plurality of data points,
determining, based on the second second-order derivative value, a second zero crossing, and
obtaining a third plurality of data points related to the PV power source.

Clause 47: The method of any preceding clause, e.g. clause 44, further comprising, based on determining that there is a power decrease, setting the operating point of the PV power source according to the power decrease.

Clause 48: The method of any preceding clause, e.g. clause 44, further comprising:

obtaining a second plurality of data points related to the PV power source,
calculating a second second-order derivative value using the obtained second plurality of data points,
determining, based on the second second-order derivative value, not an additional zero crossing,
determining that a threshold between the first second-order derivative value and the second second-order derivative value is not exceeded, and
obtaining a third plurality of data points related to the PV power source.

Clause 49: The method of any one of any preceding clause, e.g. clause 44 to clause 48, further comprising filtering the first second-order derivative value.

Clause 50: A method comprising:

obtaining a current value related to a photovoltaic (PV) module for a first time (t);
obtaining a voltage value related to the PV module for the first time (t);
calculating a second-order derivative value of the current value for first the time (t) based on the obtained current value and the obtained voltage value;
determining that there is not a zero crossing in the second-order derivative value for the first time (t);
determining that there is at least one previous zero crossing identified in a first previous time (t-1); and
setting an operating point of the PV module based on the at least one previous zero crossing.

Clause 51: The method of any preceding clause, e.g. clause 50, further comprising:
determining that a duty cycle for the first time (t) is less than a duty cycle threshold value.

Clause 52: The method of any preceding clause, e.g. clause 50 or clause 51, further comprising:

determining that there are previous current values from at least the first previous time (t-1) and a second previous time (t-2); and
determining that there are previous voltage values from at least the first and second previous times (t-1 and t-2).

Clause 53: The method of any preceding clause, e.g. clause 50, further comprising:
determining that the second-order derivative value is less than a first threshold value.

Clause 54: The method of any preceding clause, e.g. clause 53, wherein the first threshold value is between Clause 0: 5 - Clause 1: Clause 5:

Clause 55: The method of any preceding clause, e.g. clause 53, wherein the first threshold value is Clause 1:

Clause 56: The method of any one of any preceding clause, e.g. clause 53 to clause 55, wherein the first threshold value is related to current.

Clause 57: The method of any one of any preceding clause, e.g. clause 50 to clause 56, further comprising: determining that a difference between the voltage value for the time (t) and a previous voltage value associated with the at least one previous zero crossing is greater than a second threshold value.

Clause 58: The method of any preceding clause, e.g. clause 57, wherein the second threshold value is between Clause 0: 5 - Clause 1: Clause 5:

Clause 59: The method of any preceding clause, e.g. clause 57, wherein the second threshold value is Clause 1:

Clause 60: The method of any one of any preceding clause, e.g. clause 57 to clause 59, wherein the second threshold value is related to voltage.

Clause 61: The method of any one of any preceding clause, e.g. clause 50 to clause 60, further comprising: setting the operating point of the PV module using a power converter connected to an output of the PV module.

Clause 62: The method of any preceding clause, e.g. clause 61, further comprising setting the operating point of the PV module at an input of the power converter.

Clause 63: The method of any one of any preceding clause, e.g. clause 50 to clause 62, further comprising:

determining that a duty cycle for a second time (t+1) is greater than a duty cycle threshold; and
setting the operating point of the PV module to a previous operating point of the first previous time (t-1).

Clause 64: The method of any preceding clause, e.g. clause 63, further comprising:
setting the operating point of the PV module based on an identified zero crossing without calculating the second-order derivative value of the current value for the second time (t+1).

Clause 65: The method of any one of any preceding clause, e.g. clause 50 to clause 62, further comprising:

determining that a duty cycle for a second time (t+1) is greater than a duty cycle threshold;
determining that there is not at least one zero crossing identified after setting the operating point of the PV module based on the at least one previous zero crossing; and
setting the operating point of the PV module based on at least one previous operating point value.

Clause 66: The method of any preceding clause, e.g. clause 65, wherein the at least one previous operating point value comprises at least one of: a previous current value, a previous voltage value, a previous duty cycle value, a previous time value, a previous operating point identifier value, or a previous power value.

Clause 67: The method of any one of any preceding clause, e.g. clause 50 to clause 62, further comprising:

determining, at a second time (t+1), that there are not previous current values from at least two previous times after setting the operating point of the PV module based on the at least one previous zero crossing;
determining, at the second time (t+1), that there are not previous voltage values from the at least two previous times after setting the operating point of the PV module based on the at least one previous zero crossing;
obtaining a current value for a third time (t+2); and
obtaining a voltage value for the third time (t+2).

Clause 68: The method of any one of any preceding clause, e.g. clause 50 to clause 62, further comprising:

determining, at the first previous time (t-1), that a calculated second-order derivative value for the first previous time (t-1) is greater than a first threshold value;
determining that there is a zero crossing at the first previous time (t-1); and
storing at least one operating point value of the PV module based on the determined zero crossing at the first previous time (t-1).

Clause 69: The method of any preceding clause, e.g. clause 68, wherein the determining that there is the zero crossing at the first previous time (t-1) comprises comparing a sign of the second-order derivative value for the first previous time (t-1) to a sign of a previous second-order derivative value.

Clause 70: The method of any preceding clause, e.g. clause 69, wherein the at least one operating point value comprises at least one of: a current value, a voltage value, a duty cycle value, a time value, a zero crossing identifier value, or a power value.

Clause 71: The method of any one of any preceding clause, e.g. clause 50 to clause 62, further comprising:

determining that a second-order derivative value for a second time (t+1) is greater than a current threshold value;
determining that there is a zero crossing at the second time (t+1); and
storing at least one operating point value of the PV module based on the determined zero crossing at the second time (t+1).

Clause 72: The method of any preceding clause, e.g. clause 71, wherein the determining that there is the zero crossing at the second time (t+1) comprises comparing a sign of the second-order derivative value for the second time (t+1) to a sign of a previous second-order derivative value,

wherein the method further comprises:

obtaining a current value for a third time (t+2);
obtaining a voltage value for the third time (t+2), and

wherein the at least one operating point value comprises at least one of: a current value, a voltage value, a duty cycle value, a time value, a zero crossing identifier value, or a power value.

Clause 73: The method of any one of any preceding clause, e.g. clause 50 to clause 62, further comprising:

determining that there is not at least one zero crossing identified in the first previous time (t-1);
determining there is not a power decrease at the first previous time (t-1);
obtaining a current value for a second time (t+1); and
obtaining a voltage value for the second time (t+1).

Clause 74: The method of any preceding clause, e.g. clause 73, wherein the determining that there is not the power decrease at the first previous time (t-1) comprises comparing a power value from the first previous time (t-1) to a previous power value from a second prior time (t-2).

Clause 75: The method of any one of any preceding clause, e.g. clause 50 to clause 62, further comprising:

determining at a second time (t+1) that there is not at least one further zero crossing identified in a time period after setting the operating point of the PV module based on the at least one previous zero crossing;
determining there is a power decrease at the second time (t+1); and
setting the operating point of the PV module based on at least one previous operating point value.

Clause 76: The method of any preceding clause, e.g. clause 75, wherein the determining that there is the power decrease at the second time (t+1) comprises comparing a power value from the second time (t+1) to a previous power value from a prior time.

Clause 77: The method of any one of any preceding clause, e.g. clause 75 or clause 76, wherein the at least one previous operating point value comprises at least one of: a previous current value, a previous voltage value, a previous duty cycle value, a previous time value, a previous operating point identifier value, or a previous power value.

Clause 78: The method of any one of any preceding clause, e.g. clause 50 to clause 77, wherein the calculating the second-order derivative value of the current value comprises:

calculating a current total for the first time (t);
calculating a voltage total for the first time (t); and
dividing the current total for the first time (t) by the voltage total for the first time (t).

Clause 79: The method of any one of any preceding clause, e.g. clause 50 to clause 78, wherein the calculating the second-order derivative value of the current value comprises:

calculating a current total for the first time (t) by adding the current value for the first time (t), negative double a first previous current value from the first previous time (t-1), and a second previous current value from a second previous time (t-2);
calculating a voltage total for the first time (t) by adding negative the voltage value for the first time (t) and a first previous voltage value from the first previous time (t-1); and
dividing the current total for the first time (t) by the voltage total for the first time (t).

Clause 80: The method of any one of any preceding clause, e.g. clause 50 to clause 79, wherein the setting the operating point of the PV module comprises accessing at least one stored previous operating point value associated with the at least one previous zero crossing.

Clause 81: The method of any preceding clause, e.g. clause 80, wherein the at least one stored previous operating point value comprises at least one of: a previous current value, a previous voltage value, a previous duty cycle value, a previous time value, a previous operating point identifier value, a previous zero crossing identifier value, or a previous power value.

Clause 82: The method of any one of any preceding clause, e.g. clause 50 to clause 78, wherein the voltage value related to the PV module for the first time (t) is less than a voltage value related to the PV module for the first previous time (t-1).

Clause 83: The method of any one of any preceding clause, e.g. clause 50 to clause 78, wherein the current value related to the PV module for the first time (t) is greater than a current value related to the PV module for the first previous time (t-1).

Clause 84: The method of any one of any preceding clause, e.g. clause 50 to clause 83, further comprising, between the first previous time (t-1) and the first time (t), decreasing an output voltage of the PV module or increasing an output current of the PV module.

Clause 85: The method of any one of any preceding clause, e.g. clause 50 to clause 84, further comprising obtaining a respective voltage value and a respective current value for a plurality of times, wherein, between each respective time of the plurality of times, an output voltage of the PV module is decreased or an output current of the PV module is increased. Clause 86: The method of any one of any preceding clause, e.g. clause 50 to clause 85, wherein an initial voltage value and an initial current value are obtained for an open circuit voltage (Voc) with an about zero current, and wherein additional voltage values and additional current values are obtained by decreasing a voltage value or increasing a current value towards a short circuit current (Isc) with an about zero voltage.

Clause 87: The method of any preceding clause, e.g. clause 86, wherein the initial voltage value and the initial current value are obtained at an initial time, and the additional voltage values and the additional current values are obtained at additional times.

Clause 88: A computer-readable medium storing instructions, when executed by one or more processors, cause:

receiving a plurality of data points related to a photovoltaic (PV) power source,
calculating a plurality of derivatives based on the plurality of data points,
determining a zero crossing based on the plurality of derivatives, and
based on the zero crossing, setting an operating point of the PV power source.

Clause 89: The method of any preceding clause, e.g. clause 1, wherein the setting of the operating point of the PV power source comprises reducing power output of the PV power source.

Clause 90: The method of any preceding clause, e.g. clause 17, wherein the operating of the power converter in the first mode of operation comprises reducing power output of the PV module.

Clause 91: A method, performed alone or in combination with any of the preceding clauses, the method comprising mitigating one more hot spots of a photovoltaic (PV).

Clause 92: The method or apparatus according to any of the preceding clauses, wherein control circuitry is configured to operate in a first mode of operation wherein an operating point of the PV module is set based on a maximum power point tracking algorithm.

Clause 93: The method or apparatus according to any of the preceding clauses, wherein control circuitry is configured to operate in a second mode of operation wherein the operating point of the PV module is set based on a hot spot mitigation algorithm to produce a reduced power output and prevent over heating of the PV module.

Clause 94: The method or apparatus according to any of the preceding clauses, wherein the operating point is set based on an inflection point in the I-V curve of the PV module.

Clause 95: The method or apparatus according to any of the preceding clauses, wherein the operating point is set based on zero crossings in the second-order derivative of the I-V curve of the PV module.

Clause 96: The method or apparatus according to any of the preceding clauses, wherein a filter window with one or more filter thresholds is used in order to determine the zero crossings and set the operating point.

Clause 97: A system, apparatus, or controller configured to perform the method according to any of the preceding clauses any other method described herein.

Clause 98: A non-transitory computer-readable medium storing instructions that, when executed by one or more processors, cause a device to perform the method according to any of the preceding clauses or any other method described herein.

The claims follow hereafter.

**Claims**

1. A method comprising:

    receiving a plurality of data points related to a photovoltaic (PV) power source;
    calculating a plurality of derivatives based on the plurality of data points;
    determining a zero crossing based on the plurality of derivatives; and
    based on the zero crossing, setting an operating point of the PV power source.

2. The method of claim 1, wherein the plurality of data points comprise a plurality of voltage values and a plurality of current values.

3. The method of any one of claims 1-2, wherein the plurality of derivatives comprise a plurality of first-order derivatives or a plurality of second-order derivatives.

4. The method of any one of claims 1-3, wherein the plurality of derivatives are related to a current-voltage (I-V) curve of the PV power source.

5. The method of any one of claims 1-4, wherein the plurality of derivatives are derivatives of:

    current as a dependent variable and voltage as an independent variable (dI/dV), or
    voltage as a dependent variable and current as an independent variable (dV/dI).

6. The method of any one of claims 1-5, wherein the determining the zero crossing is further based on a determination that there is a change in sign between a first one of the plurality derivatives and a second one of the plurality of derivatives.

7. The method of claim 6, wherein the change in sign is from a positive value to a negative value or from a negative value to a positive value.

8. The method of any one of claims 1-7, wherein the determining the zero crossing is further based on interpolation of the plurality of derivatives.

9. The method of any one of claims 1-8, wherein determining the zero crossing is further based on a determination that a derivative of the plurality of derivatives exceeds a threshold.

10. The method of claim 9, wherein the derivative is a first absolute value and the threshold is a second absolute value.

11. The method of any one of claims 1-10, wherein the zero crossing is selected from a plurality of zero crossings based on a sorting of:

    the plurality of data points, or
    the plurality of derivatives.

12. The method of claim 11, wherein the sorting is further based on highest voltage, lowest voltage, highest current, or lowest current.

13. The method of any one of claims 1-12, further comprising:

    calculating a power related to the plurality of data points, and
    based on a determination that there is a power decrease between the calculated power and a previously calculated power related to a previous plurality of data points, setting the operating point of the PV power source further based on the previous plurality of data points.

14. The method of any one claims 1-13, further comprising filtering the plurality of derivatives before determining the zero crossing.

15. An apparatus configured to perform the method of any one of claims 1-14.

100

Startup
102

**Global Peak Search
(larger duty step) 104**

Scan for power peaks
106

More than one
power peak?
108

No

Yes

Sufficient
power?
110

No

Yes

**MPPT
112**

Shut down
122

**Hot Spot Mode
(smaller duty step)
120**

Global Peak
Timer?
114

Yes

No

Hot Spot
Mode Timer?
116

Yes

No

Hot Spot /
Zero crossing
found?
118

Yes

No

Fig. 1

Fig. 2

300

210

```
┌─────────────────────────────────────────┐
│  Calculate a current total for time period t:  │
│         Add the current measured at t,         │
│  negative double the current measured at t-1,  │
│        and the current measured at t-2         │
│                      302                       │
└─────────────────────────────────────────┘
                      │
                      ▼
┌─────────────────────────────────────────┐
│  Calculate a voltage total for time period t:  │
│      Add the voltage measured at t-1 and       │
│        negative voltage measured at t          │
│                      304                       │
└─────────────────────────────────────────┘
                      │
                      ▼
┌─────────────────────────────────────────┐
│ Divide the current total for time period t by  │
│     the voltage total for time period t        │
│                      306                       │
└─────────────────────────────────────────┘
```

# Fig. 3

Scan for peaks in a power curve
402

More than one peak?
404

No

Yes

Switch to hotspot mode
406

400

# Fig. 4

Fig. 5

Fig. 6A

Fig. 6B

Fig. 7

Fig. 8

EP 4 395 166 A1

Fig. 9

EP 4 395 166 A1

Fig. 10

EP 4 395 166 A1

Fig. 11

EP 4 395 166 A1

Fig. 12

Fig. 13

EP 4 395 166 A1

Fig. 14

EP 4 395 166 A1

Fig. 15

Fig. 16A

Fig. 16B

Fig. 16C

EP 4 395 166 A1

Fig. 16D

Fig. 16E

Fig. 16F

EP 4 395 166 A1

Fig. 16G

Fig. 16H

EP 4 395 166 A1

EP 4 395 166 A1

Fig. 16I

Fig. 16J

Fig. 16K

Fig. 16L

Fig. 17A

Fig. 17B

Fig. 18

Europäisches
Patentamt

European
Patent Office

Office européen
des brevets

# EUROPEAN SEARCH REPORT

**Application Number**

EP 23 22 0360

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/101751 A1 (DREWS PETER [DE]) 26 April 2012 (2012-04-26) * paragraphs [0021] - [0090]; claims 1-9; figures 1B-4C * | 1-15 | INV. H02S50/00 |
| A | WO 2022/252621 A1 (XIAMEN KECAN INFORMATION TECH CO LTD [CN]; KEHUA DATA CO LTD [CN]) 8 December 2022 (2022-12-08) * claims 1-8; figures 1-6 * | 1-15 | |

TECHNICAL FIELDS
SEARCHED      (IPC)

H02S

The present search report has been drawn up for all claims

| Place of search | Date of completion of the search | Examiner |
|---|---|---|
| The Hague | 21 May 2024 | Boero, Mauro |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                                         
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 22 0360

This annex lists the patent family members relating to the patent documents cited in the above-mentioned European search report.
The members are as contained in the European Patent Office EDP file on
The European Patent Office is in no way liable for these particulars which are merely given for the purpose of information.

21-05-2024

| Patent document cited in search report | Publication date | Patent family member(s) | Publication date |
|---|---|---|---|
| US 2012101751 A1 | 26-04-2012 | EP 2077453 A1<br>KR 20090074107 A<br>KR 20110137272 A<br>US 2009171597 A1<br>US 2012101751 A1 | 08-07-2009<br>06-07-2009<br>22-12-2011<br>02-07-2009<br>26-04-2012 |
| WO 2022252621 A1 | 08-12-2022 | CN 113489457 A<br>WO 2022252621 A1 | 08-10-2021<br>08-12-2022 |

EPO FORM P0459

For more details about this annex : see Official Journal of the European Patent Office, No. 12/82